# EUROPEAN PATENT APPLICATION

(11) **EP 4 368 450 A1**
(43) Date of publication of application: **15.05.2024**
(21) Application number: 22857436.4
(22) Date of filing: 28.06.2022
(51) Int. Cl.: B60Q 1/08

(54) **VEHICLE LIGHT CONTROL METHOD, LIGHTING SYSTEM, AND VEHICLE**

(30) Priority: 16.08.2021 CN 202110939124
(71) Applicant: Huawei Technologies Co., Ltd., Shenzhen, Guangdong 518129 (CN)
(72) Inventor: LIU, Shengjun, Shenzhen, Guangdong 518129 (CN); ZHANG, Junhao, Shenzhen, Guangdong 518129 (CN); DUAN, Junke, Shenzhen, Guangdong 518129 (CN)
(74) Representative: Maiwald GmbH
(86) International application number: PCT/CN2022/101849
(87) International publication number: WO 2023/020123

(57) **Abstract**

Embodiments of the present invention disclose a vehicle light control method, a lighting system, and a vehicle, to improve a function implemented by vehicle light. The method in embodiments of the present invention includes: obtaining driving information, where the driving information includes at least one of the following: navigation information, driving assistance information, and vehicle data, obtaining information about a to-be-driven path, obtaining a target light pattern corresponding to the driving information and the information about the to-be-driven path, and displaying, on the to-be-driven path by using the target light pattern, a beam emitted by a vehicle.

## Description

This application claims priority to Chinese Patent Application No. 202110939124.6, filed with the China National Intellectual Property Administration on August 16, 2021 and entitled "VEHICLE LIGHT CONTROL METHOD, LIGHTING SYSTEM, AND VEHICLE", which is incorporated herein by reference in its entirety.

### TECHNICAL FIELD

This application relates to the field of autonomous driving, and in particular, to a vehicle light control method, a lighting system, and a vehicle.

### BACKGROUND

Vehicles all have indicator lamps, and the indicator lamps can implement corresponding indication functions. The vehicles may be autonomous vehicles (autonomous vehicles, self-piloting automobile), also referred to as unmanned vehicles. The vehicles may alternatively be cars, trucks, motorcycles, public vehicles, mowers, entertainment vehicles, playground vehicles, trams, golf carts, trains, trolleys, or the like.

Existing indicator lamps of vehicles, such as a headlight, a taillight, or a turn light, each implement a single indication function, and can implement only a function of indication or illuminating a driving path.

### SUMMARY

Embodiments of the present invention provide a vehicle light control method, a lighting system, and a vehicle, to improve a function implemented by vehicle light.

According to a first aspect of embodiments of the present invention, a vehicle light control method is provided. The method includes: obtaining driving information, where the driving information includes at least one of the following: navigation information, driving assistance information, and vehicle data; obtaining information about a to-be-driven path; obtaining a target light pattern corresponding to the driving information and the information about the to-be-driven path; and displaying, on the to-be-driven path by using the target light pattern, a beam emitted by a vehicle.

It can be learned that, when the driving information is the navigation information, the target light pattern displayed on the to-be-driven path by using the beam emitted by the vehicle helps improve navigation accuracy, and can implement illumination on the to-be-driven path, thereby ensuring safety in a process in which the vehicle is driven based on navigation. In addition, another person or vehicle on the path can quickly determine, based on a prompt of the target light pattern, a location at which the vehicle is about to be driven. This facilitates avoidance of the another person or vehicle on the path, thereby improving driving safety. It should be understood that the target light pattern represents a shape and a dimension of light displayed on the ground, and target light patterns having different lengths, widths, bending, or the like are different target light patterns from each other.

When the driving information is the driving assistance information, the driving assistance information is related information for implementing self-driving. Specifically, the driving assistance information is information that is from an advanced driving assistance system ADAS of the vehicle. In addition, the target light pattern can match the driving assistance information and the to-be-driven path of the vehicle. Based on the target light pattern, a driving intention of the vehicle, an emergency decision, a driving prediction event of the vehicle, and the like can be accurately recognized, thereby improving the vehicle driving safety.

According to the first aspect, in an optional implementation, the obtaining a target light pattern corresponding to the driving information and the information about the to-be-driven path includes: obtaining at least one first display attribute, where the at least one first display attribute corresponds to the driving information, obtaining at least one second display attribute, where the at least one second display attribute corresponds to the information about the to-be-driven path, and determining that a light pattern having the at least one first display attribute and the at least one second display attribute is the target light pattern.

It can be learned that in this aspect, the target light pattern may correspond to a plurality of display attributes, thereby effectively increasing a quantity of display attributes of the target light pattern, increasing a quantity of pieces of driving information that can be prompted by the target light pattern, and effectively increasing a quantity of scenarios to which the target light pattern can be applied.

According to the first aspect, in an optional implementation, the obtaining at least one first display attribute includes: The vehicle obtains the to-be-driven path based on M plane coordinates included in the navigation information, where the to-be-driven path includes an i^{th} plane coordinate to a j^{th} plane coordinate in the M plane coordinates, both i and j are positive integers, i is greater than or equal to 1, and j is greater than i and less than or equal to M. The vehicle determines a shape of the target light pattern based on a form of the to-be-driven path. For example, if a plurality of plane coordinates included in the to-be-driven path extend along a straight line direction, it is determined that the target light pattern is in a rectangular shape. For another example, if it is determined that the plurality of plane coordinates included in the to-be-driven path extend along an arc-shaped direction, the vehicle determines that the target light pattern is in an arc shape.

It can be learned that, according to this aspect, the vehicle can determine the form of the target light pattern based on the to-be-driven path indicated by the navigation information, and a driver can quickly and accurately determine a driving direction of the vehicle based on the form of the target light pattern, thereby improving navigation efficiency and accuracy.

According to the first aspect, in an optional implementation, the second display attribute may be one or more of the following:
The vehicle determines the second display attribute based on a dimension of the to-be-driven path. For example, the second display attribute is a width, and the width included in the second display attribute may be equal to a width of a lane line of the to-be-driven path. For example, the second display attribute is a length, and the second display attribute may be a length between a first location and a second location, where the first location is a current location of the vehicle, and the second location is a location that is included in the navigation information and that is of an intersection closest to the vehicle, or the second location may be a location of a traffic light closest to the vehicle on the to-be-driven path. The vehicle determines that the first display attribute is an arc shape, the second display attribute includes a bending direction, and the bending direction included in the second display attribute is consistent with a bending direction of the lane line of the to-be-driven path.

It can be learned that, that the width of the target light pattern is equal to the width of the lane line of the to-be-driven path helps a pedestrian or another vehicle determine a width occupied by the vehicle when the vehicle is driven to a location of the target light pattern, and the pedestrian or the another vehicle may determine, based on the width of the target light pattern, whether to avoid the vehicle. This improves the driving safety. When the length of the target light pattern is equal to a distance between the current location of the vehicle and the location of the intersection closest to the vehicle, or the length of the target light pattern is equal to a distance between the current location of the vehicle and the location of the traffic light closest to the vehicle, the navigation efficiency is improved and a driving state is reminded. This improves the driving safety.

According to the first aspect, in an optional implementation, the obtaining at least one first display attribute includes: obtaining a driving list, where the driving list includes correspondences between different driving information and different display attributes, and obtaining the at least one first display attribute, where the at least one first display attribute is a display attribute that is in the driving list and that corresponds to the driving information.

It can be learned that the display attribute corresponding to the target light pattern is obtained based on the driving list, so that a speed of obtaining the target light pattern by the vehicle is improved. In addition, for a same piece of driving information, the vehicle always displays a same target light pattern. This helps the driver quickly determine current driving information based on the target light pattern, and efficiency and accuracy of prompting the driving information based on the target light pattern are improved.

According to the first aspect, in an optional implementation, the width of the target light pattern is greater than or equal to a width of the vehicle, and/or the length of the target light pattern is greater than or equal to a length of the vehicle.

It can be learned that the target light pattern can indicate a region to be occupied by the vehicle, thereby effectively improving the vehicle driving safety.

According to the first aspect, in an optional implementation, the vehicle can form the target light pattern on the to-be-driven path, where the width of the target light pattern is equal to the width of the vehicle, and the target light pattern can indicate a width occupied by the vehicle when the vehicle is driven to a region of the target light pattern.

It can be learned that a target can determine a driving range of the vehicle based on a clear boundary of the target light pattern. If the target appears within the target light pattern, it indicates that the target is within a safe distance of the vehicle, and there is a high probability that a safety accident occurs between the vehicle and the target. If the target appears outside the target light pattern, it indicates that the target is outside the safe distance of the vehicle, and there is a low probability that the safety accident occurs between the vehicle and the target.

According to the first aspect, in an optional implementation, the target light pattern is consistent with the form of the to-be-driven path. For example, the form of the to-be-driven path is a rectangle, and the target light pattern is in a rectangular shape. For another example, the form of the to-be-driven path is an arc, and the target light pattern is in an arc shape.

It can be learned that, that the target light pattern is consistent with the form of the to-be-driven path helps improve the navigation efficiency and accuracy, and avoid a case in which navigation misjudgment occurs in the driver.

According to the first aspect, in an optional implementation, the target light pattern is related to the dimension of the to-be-driven path.

It can be learned that, based on a dimension of the target light pattern, a region on a path occupied by the vehicle in the driving process can be determined. This helps avoid a traffic accident and improve the driving safety.

According to the first aspect, in an optional implementation, if the to-be-driven path is in the arc shape, the target light pattern is also in the arc shape, and a bending direction of the to-be-driven path is consistent with a bending direction of the target light pattern.

It can be learned that, in a scenario in which the vehicle needs to turn, the driver, the pedestrian, or the another vehicle is prompted, based on the target light pattern having the bending direction, that the vehicle is about to turn, and a specific turning direction of the vehicle can be indicated. This helps avoid the traffic accident and improve the driving safety.

According to the first aspect, in an optional implementation, the driving information is a driving decision that is from the advanced driving assistance system ADAS of the vehicle, and the target light pattern corresponds to a type of the driving decision. For example, the driving decision is the driving intention of the vehicle, and the driving intention includes at least one of the following: straight-through, changing a lane, turning, entering a fork, or the like. For another example, the driving decision is the emergency decision, and the emergency decision includes at least one of the following: emergency braking, emergency avoidance, or vehicle failure. For another example, the driving decision is the vehicle driving prediction event, and the vehicle driving prediction event includes that the vehicle is in a safe state or the vehicle is in a dangerous state.

It can be learned that the target light pattern can indicate the driving decision that is from the ADAS of the vehicle, and the driver, the pedestrian, or the another vehicle can quickly and accurately determine the driving decision of the vehicle based on the target light pattern. This improves the driving safety.

According to the first aspect, in an optional implementation, the driving information is a vehicle speed of the vehicle, and there is a positive correlation between the vehicle speed of the vehicle and the length of the target light pattern. To be specific, a higher vehicle speed indicates a longer length of the target light pattern, and a lower vehicle speed indicates a shorter length of the target light pattern.

It can be learned that the vehicle speed of the vehicle can be quickly determined based on the length of the target light pattern. The driver may determine, based on a requirement, whether to adjust the vehicle speed, and the pedestrian or the another vehicle can quickly determine whether to avoid the vehicle. This improves the driving safety.

According to the first aspect, in an optional implementation, there is a positive correlation between the vehicle speed of the vehicle and a flash frequency of the light displayed on the ground by using the target light pattern. To be specific, the higher vehicle speed indicates a higher flash frequency, and the lower vehicle speed indicates a lower flash frequency.

It can be learned that the vehicle speed of the vehicle can be quickly determined based on the flash frequency. The driver may determine, based on the requirement, whether to adjust the vehicle speed, and the pedestrian or the another vehicle can quickly determine whether to avoid the vehicle. This improves the driving safety.

According to the first aspect, in an optional implementation, there is a positive correlation between the vehicle speed of the vehicle and luminance of the light displayed on the ground by using the target light pattern. To be specific, the higher vehicle speed indicates higher luminance, and the lower vehicle speed indicates lower luminance.

It can be learned that the vehicle speed of the vehicle can be quickly determined based on the luminance. The driver may determine, based on the requirement, whether to adjust the vehicle speed, and the pedestrian or the another vehicle can quickly determine whether to avoid the vehicle. This improves the driving safety.

According to the first aspect, in an optional implementation, in one or more of the following cases, the light displayed on the ground by using the target light pattern has the flash frequency:
If the form of the to-be-driven path changes, the light displayed on the ground by using the target light pattern may have the flash frequency, and that the form of the driving path changes may be that the to-be-driven path of the vehicle indicates the vehicle to switch from a straight-through state to a turning state, the to-be-driven path of the vehicle indicates to switch from the turning state to the straight-through state, the to-be-driven path of the vehicle indicates that the vehicle is about to be driven to an intersection, or the to-be-driven path of the vehicle indicates that a dimension of the lane line changes (for example, the width of the lane line changes). Alternatively, light emitted by the vehicle light of the vehicle is displayed on a zebra crossing by using the target light pattern. Alternatively, an obstacle (for example, the pedestrian or the another vehicle) appears in a coverage range of the target light pattern.

It can be learned that different driving information of a plurality of vehicles is indicated by using the flash frequency, so that the efficiency of prompting the driving information to the driver, the pedestrian, or the another vehicle is improved, and the driving safety is improved.

According to the first aspect, in an optional implementation, the driving information is luminance of an environment in which the vehicle is located.

It can be learned that, in this embodiment of this application, luminance of the light emitted by the vehicle light can match the environment luminance. For example, when the environment luminance is low (for example, on a cloudy day, on a rainy day, or at night), the vehicle light can provide a function of illuminating the to-be-driven path, and the driver drives the vehicle based on the driving path illuminated by the target light pattern. This improves the driving safety.

According to the first aspect, in an optional implementation, the driving information is a distance between the vehicle and a vehicle in front, and there is a negative correlation between a value of the distance and luminance of the light displayed on the ground by using the target light pattern. To be specific, a larger distance indicates lower luminance, and a smaller distance indicates higher luminance.

It can be learned that, based on the luminance, the driver or the vehicle in front can quickly determine the distance between the vehicle and the vehicle in front, and then accurately predict whether there is a possibility of collision between the vehicle and the vehicle in front. This improves the driving safety.

According to the first aspect, in an optional implementation, there is a negative correlation between the value of the distance and a flash frequency of the light displayed on the ground by using the target light pattern. To be specific, the larger distance indicates a lower flash frequency, and the smaller distance indicates a higher flash frequency.

It can be learned that, based on the flash frequency, the driver or the vehicle in front can quickly determine the distance between the vehicle and the vehicle in front, and then accurately predict whether there is the possibility of the collision between the vehicle and the vehicle in front. This improves the driving safety.

According to the first aspect, in an optional implementation, there is a positive correlation between the value of the distance and the length of the target light pattern. To be specific, the larger distance indicates a longer length of the target light pattern, and the smaller distance indicates a shorter length of the target light pattern.

It can be learned that, based on the length of the target light pattern, the driver or the vehicle in front can quickly determine the distance between the vehicle and the vehicle in front, and then accurately predict whether there is the possibility of the collision between the vehicle and the vehicle in front. This improves the driving safety.

According to the first aspect, in an optional implementation, the driving information is that there is a to-be-recognized object around the vehicle, the target light pattern covers at least a target region, and the target region is a region occupied by the to-be-recognized object.

It can be learned that the light emitted by the vehicle light can illuminate the to-be-recognized object in the target region, so that the vehicle can accurately recognize a type of the to-be-recognized object. In addition, the illuminated to-be-recognized object helps the driver predict whether to avoid the to-be-recognized object. This improves the driving safety.

According to the first aspect, in an optional implementation, the vehicle determines the driving decision based on the type of the to-be-recognized object.

It can be learned that when the to-be-recognized object exists on the to-be-driven path of the vehicle, the vehicle may illuminate the to-be-recognized object. The vehicle can recognize the illuminated to-be-recognized object to recognize a specific type, so that the vehicle performs a corresponding driving decision, the driver of the vehicle drives the vehicle for avoidance based on the illuminated to-be-recognized object, or the like, thereby improving the vehicle driving safety in a scenario in which there is the to-be-recognized object in front of the vehicle.

According to the first aspect, in an optional implementation, the target light pattern includes a first light pattern and a second light pattern, where the first light pattern corresponds to the driving information, the second light pattern covers at least the target region, and the target region is the region occupied by the to-be-recognized object.

It can be learned that, the first light pattern shown in this aspect can illuminate the to-be-driven path, and the second light pattern can illuminate the to-be-recognized object located around the to-be-driven path, so that driving safety around the path can be accurately determined while driving of the vehicle is ensured.

According to the first aspect, in an optional implementation, the information about the to-be-driven path may be one or more of the following:
the form of the to-be-driven path, the dimension of the to-be-driven path, a location of an intersection included in the to-be-driven path, a state of a traffic light on the to-be-driven path, and the distance between the current location of the vehicle on the to-be-driven path and the closest intersection. The form of the to-be-driven path may be that the lane line of the to-be-driven path is a straight-through lane line, or the lane line of the to-be-driven path is a curved lane line. The dimension of the to-be-driven path may be the width, a length, and/or the like of the lane line of the to-be-driven path. For another example, the dimension of the to-be-driven path may alternatively be that if the lane line of the to-be-driven path is curved, the dimension of the lane line of the to-be-driven path may alternatively be a radian and/or the bending direction of the lane line of the to-be-driven path. If the to-be-driven path of the vehicle is located in a multi-fork road scenario, the information about the to-be-driven path may further include a location of a to-be-driven intersection. The distance between the current location of the vehicle on the to-be-driven path and the closest intersection may be a distance between the current location of the vehicle and the to-be-driven intersection.

It can be learned that the target light pattern can indicate a plurality of different types of to-be-driven information, thereby increasing a quantity of scenarios to which the target light pattern is applied, and improving the driving efficiency and safety.

According to the first aspect, in an optional implementation, the obtaining information about a to-be-driven path includes: A camera of the vehicle photographs the to-be-driven path to obtain a video stream that includes the information about the to-be-driven path. A processor of the vehicle receives the video stream from the camera. The processor extracts a video frame included in the video stream. The processor extracts the video frame from the video stream at a preset extraction speed. The processor obtains the information about the to-be-driven path through analyzing based on the video frame.

It can be learned that a manner in which the vehicle obtains the information about the to-be-driven path based on the video stream that includes the information about the to-be-driven path ensures that the vehicle can accurately obtain a specific situation of the to-be-driven path, effectively improves accuracy of obtaining the target light pattern, and avoids a possibility that a deviation occurs in the information about the to-be-driven path indicated by the target light pattern.

According to the first aspect, in an optional implementation, a higher extraction speed indicates a greater capability of obtaining latest information on the to-be-driven path. However, a lower extraction speed indicates a greater capability of reducing power consumption of the processor.

It can be learned that the vehicle can determine the extraction speed based on a specific situation (for example, remaining power, or complexity of a road condition of the driving) of the vehicle.

According to the first aspect, in an optional implementation, before the obtaining driving information, the method further includes: When a trigger condition is met, the vehicle is triggered to perform a step of obtaining the information about the to-be-driven path. The trigger condition is an instruction that is entered by the driver and that is for displaying the target light pattern on the to-be-driven path, or the trigger condition may be at least one of the following:
The current speed of the vehicle is greater than or equal to a first preset value, the luminance of the environment in which the vehicle is currently located is less than or equal to a second preset value, the form of the to-be-driven path of the vehicle changes, a variation of the vehicle speed is greater than or equal to a third preset value, a variation of the environment luminance is greater than or equal to a fourth preset value, or the like. That the form of the driving path changes may be that the to-be-driven path of the vehicle indicates the vehicle to switch from a straight-through direction to the turning state, the to-be-driven path of the vehicle indicates to switch from the turning state to the straight-through state, the to-be-driven path of the vehicle indicates that the vehicle is about to be driven to the intersection, or the to-be-driven path of the vehicle indicates that the dimension of the lane line changes (for example, the width of the lane line changes).

It can be learned that the vehicle can determine, based on the trigger condition, whether to display the target light pattern on the to-be-driven path, thereby avoiding a waste of power consumption caused by displaying the target light pattern in a scenario in which the target light pattern does not need to be displayed.

According to the first aspect, in an optional implementation, along an extension direction of the to-be-driven path, a center line of the target light pattern may coincide with a center line of the to-be-driven path, or an offset between the center line of the target light pattern and the center line of the to-be-driven path may be less than or equal to a first distance. For example, the first distance may be 0.5 m.

It can be learned that the display manner of the target light pattern is used to ensure that the target light pattern can be accurately displayed on the to-be-driven path.

According to the first aspect, in an optional implementation, along a transverse direction of the to-be-driven path, a distance between a boundary line of the target light pattern and the lane line of the to-be-driven path is less than or equal to a second distance. For example, a distance between a left boundary line of the target light pattern and a left lane line of the to-be-driven path is less than or equal to the second distance. For another example, a distance between a right boundary line of the target light pattern and a right lane line of the to-be-driven path is less than or equal to the second distance, or when the length indicated by the second display attribute is the length between the first location and the second location, along the extension direction of the to-be-driven path, upper and lower boundary lines of the target light pattern respectively coincide with the first location and the second location.

It can be learned that the target light pattern can accurately indicate the width of the lane line or accurately indicate a distance between the first location and the second location, thereby improving the driving safety.

According to the first aspect, in an optional implementation, the width of the target light pattern is equal to a narrowest width of the lane line of the to-be-driven path. The driver can accurately determine, based on the illuminated to-be-driven path, a case in which the lane line is suddenly narrowed. This improves the driving safety.

According to the first aspect, in an optional implementation, the vehicle forms the target light pattern on the zebra crossing of the to-be-driven path, and the target light pattern can illuminate the zebra crossing. When walking on the zebra crossing, the pedestrian notices the target light pattern. This helps the pedestrian avoid the vehicle on the zebra crossing. In addition, because the target light pattern can illuminate the zebra crossing, the zebra crossing does not become a blind spot of the driver, thereby effectively avoiding a possibility of a safety accident between the vehicle and the pedestrian.

According to the first aspect, in an optional implementation, a larger degree of change of the form of the to-be-driven path indicates higher luminance of the light displayed on the ground by using the target light pattern, and a smaller degree of change of the form of the to-be-driven path indicates lower luminance. For example, a structure of the to-be-driven path has a radian, a larger radian indicates higher luminance, and a smaller radian indicates lower luminance.

It can be learned that, based on the luminance, a case in which the form of the to-be-driven path changes can be quickly determined, to ensure the safety of the driver in the driving process.

According to the first aspect, in an optional implementation, luminance provided when the to-be-driven path of the vehicle indicates that the dimension of the lane line changes is greater than luminance provided when the to-be-driven path indicates that the dimension of the lane line does not change.

It can be learned that, based on the luminance, a case in which the dimension of the to-be-driven path changes can be quickly determined, to ensure the safety of the driver in the driving process.

According to the first aspect, in an optional implementation, luminance provided when the light emitted by the vehicle is displayed on the zebra crossing by using the target light pattern is greater than luminance provided when the light emitted by the vehicle is not displayed on the zebra crossing by using the target light pattern.

It can be learned that the target light pattern helps the pedestrian notice a case in which the vehicle is about to be driven to the zebra crossing, thereby avoiding a safety accident between the vehicle and the pedestrian.

According to the first aspect, in an optional implementation, when the obstacle (for example, the pedestrian or the another vehicle) appears in the range of the target light pattern of the vehicle, luminance of light in the range of the target light pattern is greater than luminance provided when no obstacle appears in the range of the target light pattern of the vehicle.

It can be learned that the luminance helps the driver notice a case in which the obstacle appears in front of the vehicle, thereby improving the driving safety.

According to the first aspect, in an optional implementation, after the displaying, on the to-be-driven path by using the target light pattern, a beam emitted by a vehicle, the method further includes: The vehicle recaptures a calibrated image by using the camera of the vehicle, where the calibrated image includes the to-be-driven path and the target light pattern displayed on the to-be-driven path. The vehicle determines, based on the calibrated image, whether the target light pattern meets a recalibration condition. Specifically, when determining that the calibrated image meets at least one of the following conditions, the vehicle determines that the target light pattern meets the recalibration condition:
The vehicle determines that the center line of the target light pattern deviates from the lane center line of the to-be-driven path, or the vehicle determines that a distance between the center line of the target light pattern and the lane center line of the to-be-driven path is greater than an offset; when the width of the target light pattern is equal to the width of the lane line of the to-be-driven path, along the transverse direction of the to-be-driven path, boundary lines on two sides of the target light pattern deviate from boundary lines on two sides of the lane line; when the bending direction of the target light pattern needs to be consistent with the bending direction of the to-be-driven path, the bending direction of the target light pattern is inconsistent with the bending direction of the to-be-driven path; or the like.

It can be learned that in this aspect, based on the recalibration condition, whether the target light pattern is successfully displayed on the to-be-driven path can be accurately determined, thereby avoiding a case in which the target light pattern is not successfully displayed on the to-be-driven path, and improving accuracy of indicating the driving information by the target light pattern.

According to a second aspect of embodiments of the present invention, a lighting system is provided. The lighting system includes a vehicle light module and a control unit. The control unit is connected to the vehicle light module. The control unit is configured to obtain driving information, where the driving information includes at least one of the following: navigation information, driving assistance information, and vehicle data, is further configured to obtain information about a to-be-driven path, and is further configured to obtain a target light pattern corresponding to the driving information and the information about the to-be-driven path. The vehicle light module is configured to display, on the to-be-driven path by using the target light pattern, a beam emitted by a vehicle.

For descriptions of beneficial effects shown in this aspect, refer to the first aspect. Details are not described again.

According to the second aspect, in an optional implementation, the control unit is configured to: obtain at least one first display attribute, where the at least one first display attribute corresponds to the driving information, obtain at least one second display attribute, where the at least one second display attribute corresponds to the information about the to-be-driven path, and determine that a light pattern having the at least one first display attribute and the at least one second display attribute is the target light pattern.

According to the second aspect, in an optional implementation, the control unit is configured to obtain the to-be-driven path based on M plane coordinates included in the navigation information, where the to-be-driven path includes an i^{th} plane coordinate to a j^{th} plane coordinate in the M plane coordinates, both i and j are positive integers, i is greater than or equal to 1, and j is greater than i and less than or equal to M. The vehicle determines a shape of the target light pattern based on a form of the to-be-driven path. For example, if a plurality of plane coordinates included in the to-be-driven path extend along a straight line direction, it is determined that the target light pattern is in a rectangular shape. For another example, if it is determined that the plurality of plane coordinates included in the to-be-driven path extend along an arc-shaped direction, the control unit determines that the target light pattern is in an arc shape.

According to the second aspect, in an optional implementation, the second display attribute may be one or more of the following:
The control unit determines the second display attribute based on a dimension of the to-be-driven path. For example, the second display attribute is a width, and the width included in the second display attribute is equal to a width of a lane line of the to-be-driven path. The second display attribute determined by the control unit is a length. For example, the length indicated by the second display attribute is a length between a first location and a second location, where the first location is a current location of the vehicle, and the second location is a location that is included in the navigation information and that is of an intersection closest to the vehicle, or the second location may be a location of a traffic light closest to the vehicle on the to-be-driven path. The control unit determines that the first display attribute is an arc shape, the second display attribute includes a bending direction, and the bending direction included in the second display attribute is consistent with a bending direction of the lane line of the to-be-driven path.

According to the second aspect, in an optional implementation, the control unit is configured to: obtain a driving list, where the driving list includes correspondences between different driving information and different display attributes, and obtain the at least one first display attribute, where the at least one first display attribute is a display attribute that is in the driving list and that corresponds to the driving information.

According to the second aspect, in an optional implementation, a width of the target light pattern is greater than or equal to a width of the vehicle, and/or a length of the target light pattern is greater than or equal to a length of the vehicle.

According to the second aspect, in an optional implementation, the control unit is configured to form the target light pattern on the to-be-driven path, where the width of the target light pattern is greater than or equal to the width of the vehicle, and the target light pattern can indicate a width occupied by the vehicle when the vehicle is driven to a region of the target light pattern.

According to the second aspect, in an optional implementation, the target light pattern is consistent with the form of the to-be-driven path. For example, the form of the to-be-driven path is a rectangle, and the target light pattern is in a rectangular shape. For another example, the form of the to-be-driven path is an arc, and the target light pattern is in an arc shape.

According to the second aspect, in an optional implementation, the target light pattern is related to the dimension of the to-be-driven path.

According to the second aspect, in an optional implementation, if the to-be-driven path is in the arc shape, the target light pattern is also in the arc shape, and a bending direction of the to-be-driven path is consistent with a bending direction of the target light pattern.

According to the second aspect, in an optional implementation, the driving information is a driving decision that is from an advanced driving assistance system ADAS of the vehicle, and the target light pattern corresponds to a type of the driving decision.

According to the second aspect, in an optional implementation, the driving decision is a driving intention of the vehicle, and the driving intention includes at least one of the following: straight-through, changing a lane, turning, entering a fork, or the like.

According to the second aspect, in an optional implementation, the driving decision is an emergency decision, and the emergency decision includes at least one of the following: emergency braking, emergency avoidance, or vehicle failure.

According to the second aspect, in an optional implementation, the driving decision is a vehicle driving prediction event, and the vehicle driving prediction event includes that the vehicle is in a safe state or the vehicle is in a dangerous state.

According to the second aspect, in an optional implementation, the driving information is a vehicle speed of the vehicle, and there is a positive correlation between the vehicle speed of the vehicle and the length of the target light pattern. To be specific, a higher vehicle speed indicates a longer length of the target light pattern, and a lower vehicle speed indicates a shorter length of the target light pattern.

According to the second aspect, in an optional implementation, there is a positive correlation between the vehicle speed of the vehicle and a flash frequency of light displayed on a ground by using the target light pattern. To be specific, the higher vehicle speed indicates a higher flash frequency, and the lower vehicle speed indicates a lower flash frequency.

According to the second aspect, in an optional implementation, there is a positive correlation between the vehicle speed of the vehicle and luminance of the light displayed on the ground by using the target light pattern. To be specific, the higher vehicle speed indicates higher luminance, and the lower vehicle speed indicates lower luminance.

According to the second aspect, in an optional implementation, in one or more of the following cases, the light displayed on the ground by using the target light pattern has the flash frequency:
If the form of the to-be-driven path changes, the light displayed on the ground by using the target light pattern has the flash frequency, and that the form of the driving path changes may be that the to-be-driven path of the vehicle indicates the vehicle to switch from a straight-through state to a turning state, the to-be-driven path of the vehicle indicates to switch from the turning state to the straight-through state, the to-be-driven path of the vehicle indicates that the vehicle is about to be driven to an intersection, or the to-be-driven path of the vehicle indicates that a dimension of the lane line changes (for example, the width of the lane line changes).

Alternatively, the target light pattern of the vehicle is displayed on a zebra crossing.

Alternatively, an obstacle (for example, a pedestrian or another vehicle) appears in a range of the target light pattern of the vehicle.

According to the second aspect, in an optional implementation, the driving information is luminance of an environment in which the vehicle is located.

According to the second aspect, in an optional implementation, the driving information is a distance between the vehicle and a vehicle in front, and there is a negative correlation between a value of the distance and luminance of light displayed on a ground by using the target light pattern. To be specific, a larger distance indicates lower luminance, and a smaller distance indicates higher luminance.

According to the second aspect, in an optional implementation, there is a negative correlation between the value of the distance and a flash frequency of the light displayed on the ground by using the target light pattern. To be specific, the larger distance indicates a lower flash frequency, and the smaller distance indicates a higher flash frequency.

According to the second aspect, in an optional implementation, there is a positive correlation between the value of the distance and the length of the target light pattern. To be specific, the larger distance indicates a longer length of the target light pattern, and the smaller distance indicates a shorter length of the target light pattern.

According to the second aspect, in an optional implementation, the driving information is that there is a to-be-recognized object around the vehicle, the target light pattern covers at least a target region, and the target region is a region occupied by the to-be-recognized object.

According to the second aspect, in an optional implementation, the control unit is configured to capture a to-be-recognized image including the to-be-recognized object, and the control unit obtains a type of the to-be-recognized object based on the to-be-recognized image.

According to the second aspect, in an optional implementation, the control unit determines the driving decision based on the type of the to-be-recognized object.

According to the second aspect, in an optional implementation, the target light pattern includes a first light pattern and a second light pattern, where the first light pattern corresponds to the driving information, the second light pattern covers at least the target region, and the target region is the region occupied by the to-be-recognized object.

According to the second aspect, in an optional implementation, the information about the to-be-driven path may be one or more of the following:
the form of the to-be-driven path, the dimension of the to-be-driven path, a location of an intersection included in the to-be-driven path, a state of a traffic light on the to-be-driven path, and a distance between the current location of the vehicle on the to-be-driven path and the closest intersection. The form of the to-be-driven path may be that the lane line of the to-be-driven path is a straight-through lane line, or the lane line of the to-be-driven path is a curved lane line. The dimension of the to-be-driven path may be the width, a length, and/or the like of the lane line of the to-be-driven path. For another example, the dimension of the to-be-driven path may alternatively be that if the lane line of the to-be-driven path is curved, the dimension of the lane line of the to-be-driven path may alternatively be a radian and/or the bending direction of the lane line of the to-be-driven path. If the to-be-driven path of the vehicle is located in a multi-fork road scenario, the information about the to-be-driven path may further include a location of a to-be-driven intersection. The distance between the current location of the vehicle on the to-be-driven path and the closest intersection may be a distance between the current location of the vehicle and the to-be-driven intersection.

According to the second aspect, in an optional implementation, the control unit is configured to photograph the to-be-driven path by using a camera to obtain a video stream that includes the information about the to-be-driven path. The control unit receives the video stream from the camera. The control unit extracts a video frame included in the video stream. The control unit extracts the video frame from the video stream at a preset extraction speed. The control unit is configured to obtain the information about the to-be-driven path through analyzing based on the video frame.

According to the second aspect, in an optional implementation, a higher extraction speed indicates a greater capability of obtaining latest information on the to-be-driven path. However, a lower extraction speed indicates a greater capability of reducing power consumption of a processor.

According to the second aspect, in an optional implementation, the control unit is further configured to: when a trigger condition is met, be triggered to perform a step of obtaining the information about the to-be-driven path. The trigger condition is an instruction that is entered by the driver and that is for displaying the target light pattern on the to-be-driven path, or the trigger condition may be at least one of the following:
The current speed of the vehicle is greater than or equal to a first preset value, the luminance of the environment in which the vehicle is currently located is less than or equal to a second preset value, the form of the to-be-driven path of the vehicle changes, a variation of the vehicle speed is greater than or equal to a third preset value, a variation of the environment luminance is greater than or equal to a fourth preset value, or the like. That the form of the driving path changes may be that the to-be-driven path of the vehicle indicates the vehicle to switch from a straight-through direction to the turning state, the to-be-driven path of the vehicle indicates to switch from the turning state to the straight-through state, the to-be-driven path of the vehicle indicates that the vehicle is about to be driven to the intersection, or the to-be-driven path of the vehicle indicates that the dimension of the lane line changes (for example, the width of the lane line changes).

According to the second aspect, in an optional implementation, along an extension direction of the to-be-driven path, a center line of the target light pattern may coincide with a center line of the to-be-driven path, or an offset between the center line of the target light pattern and the center line of the to-be-driven path may be less than or equal to a first distance. For example, the first distance may be 0.5 m.

According to the second aspect, in an optional implementation, along a transverse direction of the to-be-driven path, a distance between a boundary line of the target light pattern and the lane line of the to-be-driven path is less than or equal to a second distance. For example, a distance between a left boundary line of the target light pattern and a left lane line of the to-be-driven path is less than or equal to the second distance. For another example, a distance between a right boundary line of the target light pattern and a right lane line of the to-be-driven path is less than or equal to the second distance, or when the length indicated by the second display attribute is the length between the first location and the second location, along the extension direction of the to-be-driven path, upper and lower boundary lines of the target light pattern respectively coincide with the first location and the second location.

According to the second aspect, in an optional implementation, the width of the target light pattern is equal to a narrowest width of the lane line of the to-be-driven path. The driver can accurately determine, based on the illuminated to-be-driven path, a case in which the lane line is suddenly narrowed. This improves driving safety.

According to the second aspect, in an optional implementation, the vehicle light module is configured to form the target light pattern on the zebra crossing of the to-be-driven path, to illuminate the zebra crossing.

According to the second aspect, in an optional implementation, a larger degree of change of the form of the to-be-driven path indicates higher luminance of the light displayed on the ground by using the target light pattern, and a smaller degree of change of the form of the to-be-driven path indicates lower luminance of the light displayed on the ground by using the target light pattern. For example, a structure of the to-be-driven path has a radian, a larger radian indicates higher luminance, and a smaller radian indicates lower luminance.

According to the second aspect, in an optional implementation, luminance provided when the to-be-driven path changes is greater than luminance provided when the to-be-driven path does not change. For example, luminance provided when the to-be-driven path is always in the straight-through state is less than luminance provided when the to-be-driven path turns.

According to the second aspect, in an optional implementation, luminance provided when the to-be-driven path of the vehicle indicates that the dimension of the lane line changes is greater than luminance provided when the to-be-driven path indicates that the dimension of the lane line does not change.

According to the second aspect, in an optional implementation, luminance provided when the light emitted by the vehicle is displayed on the zebra crossing by using the target light pattern is greater than luminance provided when the light emitted by the vehicle is not displayed on the zebra crossing by using the target light pattern.

According to the second aspect, in an optional implementation, when the obstacle (for example, the pedestrian or the another vehicle) appears in the range of the target light pattern of the vehicle, luminance of the light emitted by the vehicle light is greater than luminance that is of the light emitted by the vehicle light and that is provided when no obstacle appears in the range of the target light pattern of the vehicle.

According to the second aspect, in an optional implementation, the beam emitted by the vehicle light module is displayed on the to-be-driven path by using the target light pattern. The control unit is configured to recapture a calibrated image by using the camera, where the calibrated image includes the to-be-driven path and the target light pattern displayed on the to-be-driven path. The control unit is configured to determine, based on the calibrated image, whether the target light pattern meets a recalibration condition. Specifically, when determining that the calibrated image meets at least one of the following conditions, the control unit determines that the target light pattern meets the recalibration condition:
The control unit is configured to determine that the center line of the target light pattern deviates from the lane center line of the to-be-driven path, or the control unit is configured to determine that a distance between the center line of the target light pattern and the lane center line of the to-be-driven path is greater than an offset; when the width of the target light pattern is equal to the width of the lane line of the to-be-driven path, along the transverse direction of the to-be-driven path, boundary lines on two sides of the target light pattern deviate from boundary lines on two sides of the lane line; when the bending direction of the target light pattern needs to be consistent with the bending direction of the to-be-driven path, the bending direction of the target light pattern is inconsistent with the bending direction of the to-be-driven path; or the like.

According to a third aspect of embodiments of the present invention, a vehicle is provided, where the vehicle includes the lighting system in the second aspect.

### BRIEF DESCRIPTION OF DRAWINGS

FIG. 1 is a functional block diagram of an embodiment of a vehicle according to this application;
FIG. 2 is a flowchart of steps of a first embodiment of a vehicle light control method according to this application;
FIG. 3a is an example diagram of a first application scenario according to this application;
FIG. 3b is an example diagram of a second application scenario according to this application;
FIG. 3c is an example diagram of a third application scenario according to this application;
FIG. 3d is an example diagram of a fourth application scenario according to this application;
FIG. 3e is an example diagram of a fifth application scenario according to this application;
FIG. 4 is a first example diagram of application scenario comparison according to this application;
FIG. 4a is an example diagram of a specific road condition in which a vehicle turns right according to an existing solution;
FIG. 4b is an example diagram of a specific road condition in which a vehicle turns right according to this application;
FIG. 5 is a second example diagram of application scenario comparison according to this application;
FIG. 5a is an example diagram of illumination of a vehicle low beam light according to an existing solution;
FIG. 5b is an example diagram of illumination of a target light pattern according to this application;
FIG. 6 is a third example diagram of application scenario comparison according to this application;
FIG. 6a is an example diagram of illumination of a vehicle low beam light when a width of a lane line changes according to an existing solution;
FIG. 6b is an example diagram of illumination of a target light pattern when a width of a lane line changes according to this application;
FIG. 7 is a fourth example diagram of application scenario comparison according to this application;
FIG. 7a is an example diagram of illumination provided when a vehicle low beam light illuminates a zebra crossing according to an existing solution;
FIG. 7b is an example diagram of illumination provided when a target light pattern illuminates a zebra crossing according to this application;
FIG. 8a is an example diagram of illumination provided when a vehicle low beam light illuminates the front of a vehicle according to an existing solution;
FIG. 8b is an example diagram of illumination provided when a target light pattern illuminates the front of a vehicle according to this application;
FIG. 8c is an example diagram in which there is a first distance between a vehicle and a vehicle in front;
FIG. 8d is an example diagram in which there is a second distance between a vehicle and a vehicle in front;
FIG. 9 is a flowchart of steps of a second embodiment of a vehicle light control method according to this application;
FIG. 10 is a sixth example diagram of application scenario comparison according to this application;
FIG. 10a is an example diagram of illumination provided when a vehicle drives backwards into a parking lot according to an existing solution;
FIG. 10b is an example diagram of illumination provided by a target light pattern when a vehicle drives backwards into a parking lot according to this application;
FIG. 11 is a seventh example diagram of application scenario comparison according to this application;
FIG. 11a is an example diagram of illumination provided when a vehicle is in a dangerous state according to an existing solution;

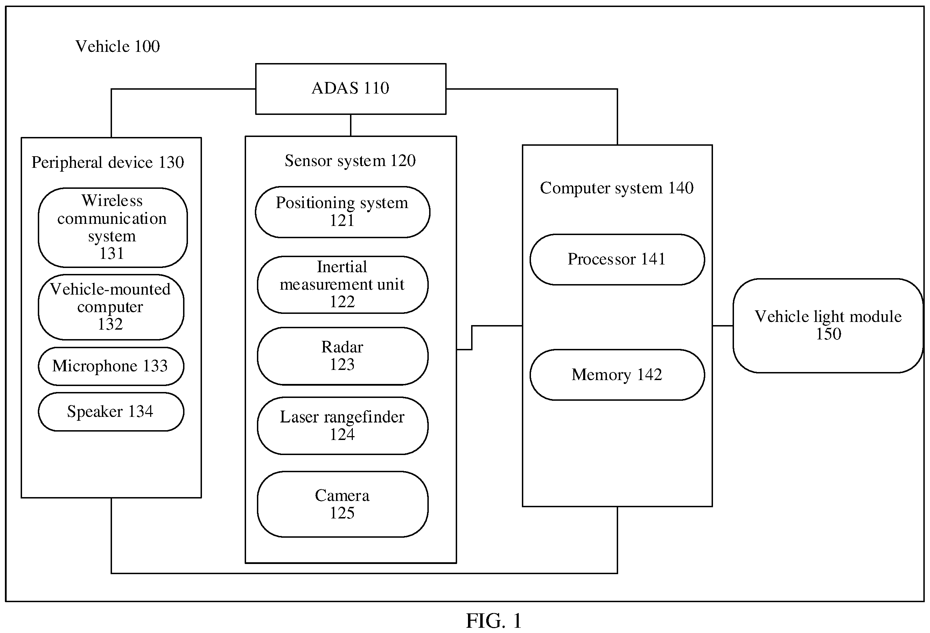

FIG. 1 1b is an example diagram of illumination provided by a target light pattern when a vehicle is in a dangerous state according to this application;

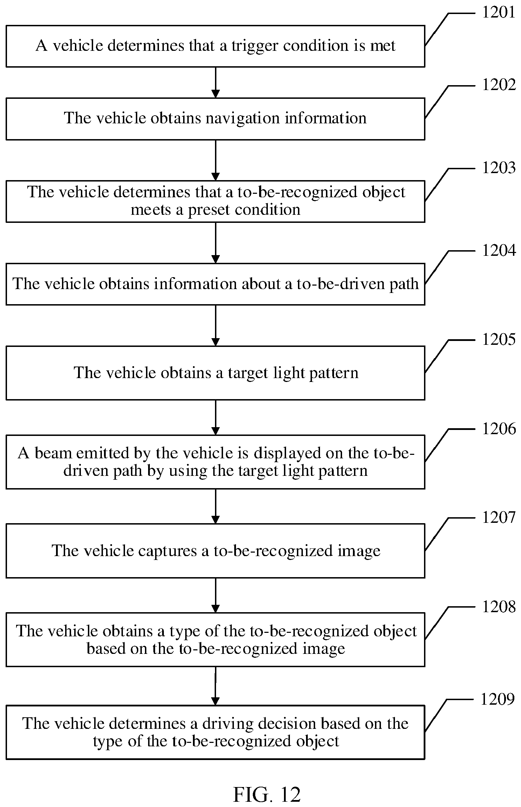

FIG. 12 is a flowchart of steps of a third embodiment of a vehicle light control method according to this application;

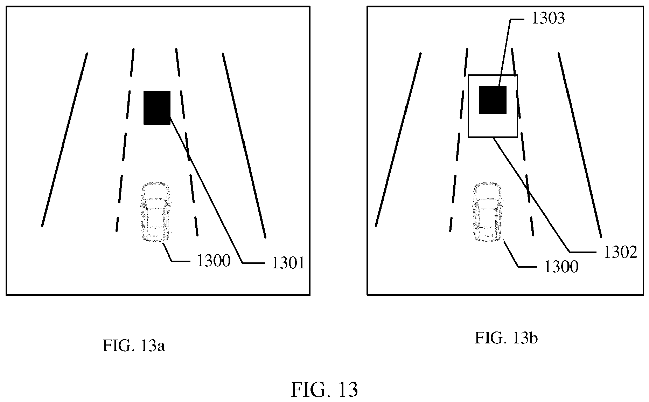

FIG. 13 is an eighth example diagram of application scenario comparison according to this application;
FIG. 13a is an example diagram of illumination provided for a to-be-recognized object that exists on a to-be-driven path according to an existing solution;
FIG. 13b is an example diagram of illumination provided by a target light pattern for a to-be-recognized object that exists on a to-be-driven path according to this application;

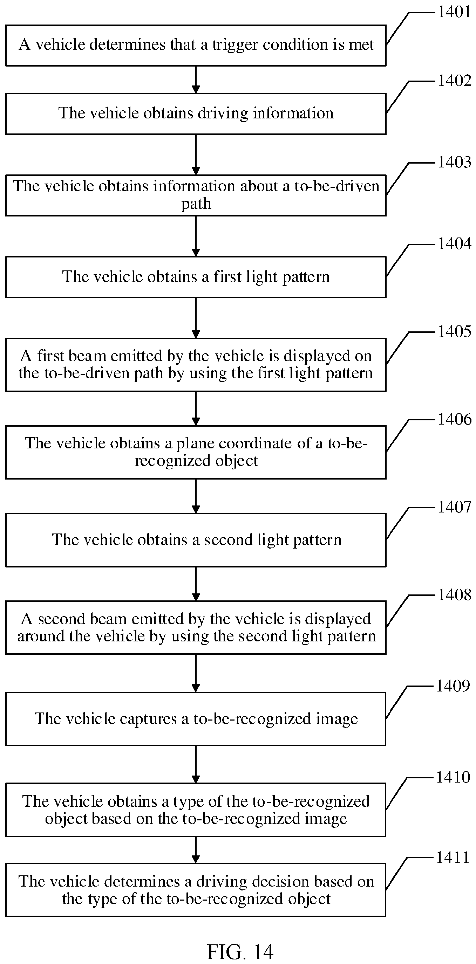

FIG. 14 is a flowchart of steps of a fourth embodiment of a vehicle light control method according to this application;

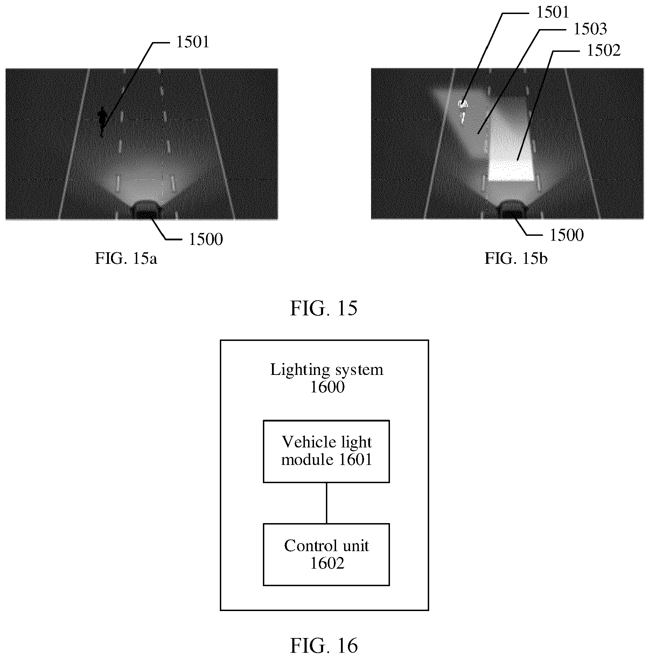

FIG. 15 is a ninth example diagram of application scenario comparison according to this application;
FIG. 15a is an example diagram of illumination provided for a to-be-recognized object that exists in front of a vehicle according to an existing solution;
FIG. 15b is an example diagram of illumination provided by a target light pattern for a to-be-recognized object that exists in front of a vehicle according to this application; and
FIG. 16 is an example diagram of a structure of an embodiment of a lighting system according to this application.

### DESCRIPTION OF EMBODIMENTS

The following clearly and completely describes the technical solutions in embodiments of the present invention with reference to the accompanying drawings in embodiments of the present invention. It is clear that the described embodiments are merely some but not all of embodiments of the present invention. All other embodiments obtained by a person skilled in the art based on embodiments of the present invention without creative efforts shall fall within the protection scope of the present invention.

The following first describes a vehicle to which this application is applied. FIG. 1 is a functional block diagram of an embodiment of a vehicle according to this application. In an embodiment, a vehicle 100 is configured to be in a fully or partially autonomous driving mode. For example, the vehicle 100 may control the vehicle 100 in an autonomous driving mode, and may determine current states of the vehicle and an ambient environment of the vehicle using a manual operation, determine a possible behavior of at least one another vehicle in the ambient environment, determine a confidence level corresponding to a possibility that the another vehicle performs the possible behavior, and control the vehicle 100 based on the determined information. When the vehicle 100 is in the autonomous driving mode, the vehicle 100 may be operated in a case of no man-machine interaction. The vehicle 100 may include various systems, each of which may include a plurality of elements. In addition, all the systems and elements of the vehicle 100 may be interconnected to each other wiredly or wirelessly.

The vehicle described in embodiments includes a sensor system 120, and the sensor system 120 may include several sensors that sense information about the ambient environment of the vehicle 100. For example, the sensor system 120 may include a positioning system 121 (the positioning system may be a global positioning system (global positioning system, GPS), a BeiDou system, or another positioning system), an inertial measurement unit (inertial measurement unit, IMU) 122, a radar 123, a laser rangefinder 124, and a camera 125. The sensor system 120 may further include sensors (for example, an in-vehicle air quality monitor, a fuel gauge, and an oil temperature gauge) of an internal system of the monitored vehicle 100. Sensor data from one or more of these sensors can be used for detecting an object and corresponding features (a position, a shape, a direction, a speed, and the like) of the object. Such detection and recognition are key functions of a safe operation of the autonomous driving vehicle 100. The positioning system 121 may be configured to estimate a geographical location of the vehicle 100. The IMU 122 is configured to sense position and orientation changes of the vehicle 100 based on an inertial acceleration. In an embodiment, the IMU 122 may be a combination of an accelerometer and a gyroscope. The radar 123 may sense an object in the ambient environment of the vehicle 100 by using a radio signal. In some embodiments, in addition to sensing the object, the radar 123 can be further configured to sense a speed and/or a heading direction of the object. A specific type of the radar 123 is not limited in embodiments. For example, the radar 123 may be a millimeter wave radar or a lidar. The laser rangefinder 124 may sense, by using a laser, an object in an environment in which the vehicle 100 is located. In some embodiments, the laser rangefinder 124 may include one or more laser sources, a laser scanner, one or more detectors, and other system components. The camera 125 may be configured to capture a plurality of images of the ambient environment of the vehicle 100. The camera 125 may be a static camera, a video camera, a monocular/binocular camera, or an infrared imager.

The vehicle 100 further includes an advanced driving assistance system (advanced driving assistance system, ADAS) 110. During vehicle driving, the ADAS 110 senses the ambient environment at any time, collects data, identifies, detects, and tracks static and dynamic objects, and performs system computing and analysis based on navigation map data. In this way, a driver can be aware of any potential risk in advance, improving comfort and safety of vehicle driving. For example, the ADAS 110 may control the vehicle based on data obtained by the sensor system 120. For another example, the ADAS 110 may control the vehicle based on vehicle data. The vehicle data may be main data (such as fuel consumption, an engine rotational speed, and a temperature), vehicle speed information, steering wheel angle information, or vehicle body attitude data on a vehicle dashboard, or the like.

The ADAS 110 may control the vehicle in one or more of the following manners:

The ADAS 110 adjusts a heading direction of the vehicle 100. The ADAS 110 controls an operation speed of an engine of the vehicle and controls a speed of the vehicle 100. The ADAS 110 operates an image captured by the camera 125, to identify an object and/or a feature in the ambient environment of the vehicle 100. In some embodiments, the ADAS 110 may be configured to: map an environment, track an object, estimate a speed of an object, and the like. The ADAS 110 determines a driving route of the vehicle 100. In some embodiments, the ADAS 110 may determine the driving route for the vehicle 100 with reference to one or more pieces of predetermined map data from the sensor system 120. The ADAS 110 may identify, evaluate, and avoid or otherwise cross a potential obstacle in the environment of the vehicle 100.

The vehicle 100 interacts with an external sensor, another vehicle, another computer system, or a user via a peripheral device 130. The peripheral device 130 may include a wireless communication system 131, a vehicle-mounted computer 132, a microphone 133, and/or a speaker 134.

In some embodiments, the peripheral device 130 provides a means for a user of the vehicle 100 to interact with a user interface. For example, the vehicle-mounted computer 132 may provide information for the user of the vehicle 100. The user interface may further be used to operate the vehicle-mounted computer 132 to receive user input. The vehicle-mounted computer 132 may perform an operation by using a touchscreen. In another case, the peripheral device 130 may provide a means for the vehicle 100 to communicate with another device in the vehicle. For example, the microphone 133 may receive audio (for example, a voice command or another audio input) from the user of the vehicle 100. Similarly, the speaker 134 may output audio to the user of the vehicle 100.

The wireless communication system 131 may wirelessly communicate with one or more devices directly or over a communication network. For example, the wireless communication system 131 may use a 3^{rd}-generation (3^{rd}-generation, 3G) mobile communication technology for cellular communication, such as code division multiple access (code division multiple access, CDMA), global system for mobile communications (global system for mobile communications, GSM), or general packet radio service (general packet radio service, GPRS) technology. The wireless communication system 131 may use a 4^{th} generation mobile communication technology (the 4^{th} generation mobile communication technology, 4G) for cellular communication, such as long term evolution (long term evolution, LTE). The wireless communication system 131 may further use a 5^{th} generation mobile communication technology (5^{th} generation mobile communication technology, 5G) for cellular communication. The wireless communication system 131 may use a wireless local area network (wireless local area network, WLAN) for communication. In some embodiments, the wireless communication system 131 may directly communicate with a device over an infrared link, Bluetooth, or a ZigBee (ZigBee) protocol. The wireless communication system 131 may alternatively use various vehicle communication systems, for example, the wireless communication system 131 may include one or more dedicated short-range communications (dedicated short-range communications, DSRC) devices that may include public and/or private data communication between vehicles and/or roadside stations.

Some or all functions of the vehicle 100 are controlled by a computer system 140. The computer system 140 may control the functions of the vehicle 100 based on input received from various systems (for example, the sensor system 120, the ADAS 110, and the peripheral device 130) and from the user interface. The computer system 140 may include at least one processor 141 that executes instructions stored in a non-transitory computer-readable medium such as a memory 142. The computer system 140 may alternatively be a plurality of computing devices that control individual components or subsystems of the vehicle 100 in a distributed manner.

A type of the processor 141 is not limited in embodiments. For example, the processor 141 may be one or more field-programmable gate arrays (field-programmable gate arrays, FPGAs), an application-dedicated integrated circuit (application specific integrated circuit, ASIC), a system on chip (system on chip, SoC), a central processing unit (central processor unit, CPU), a network processor (network processor, NP), a digital signal processing circuit (digital signal processor, DSP), a microcontroller (microcontroller unit, MCU), a programmable controller (programmable logic device, PLD), or another integrated chip, or any combination of the foregoing chips or processors. The processor 141 may be located inside the vehicle, or the processor 141 may be located far away from the vehicle and perform wireless communication with the vehicle.

In some embodiments, the memory 142 may include an instruction (for example, program logic). The instruction may be executed by the processor 141 to perform various functions of the vehicle 100. In addition to the instruction, the memory 142 may further store data, such as map data, route information, and a position, a direction, a speed and other vehicle data of the vehicle. The information stored in the memory 142 may be used by the vehicle 100 and the computer system 140 during operation of the vehicle 100 in an autonomous, a semi-autonomous, and/or a manual mode.

The vehicle 100 described in embodiments further includes a vehicle light module 150. A beam emitted by the vehicle light module 150 can display a target light pattern on a to-be-driven path of the vehicle 100. The following describes, with reference to each embodiment, a process in which the beam emitted by the vehicle forms the target light pattern on the to-be-driven path. The light module described in embodiments may not only be used in a vehicle, but also be used in a driving tool, such as, a ship, an airplane, or a helicopter.

### Embodiment 1

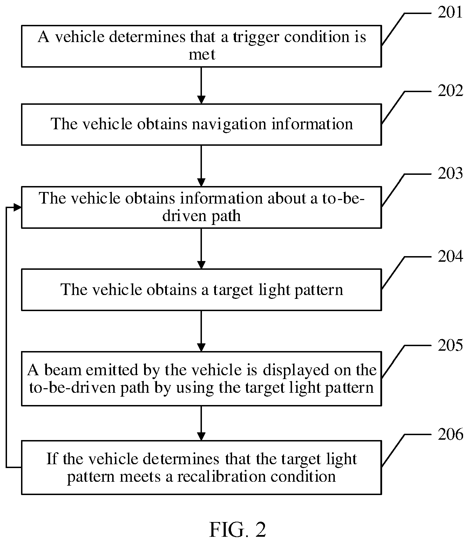

This embodiment describes, with reference to FIG. 2, the process in which the vehicle 100 displays the target light pattern on the to-be-driven path. FIG. 2 is a flowchart of steps of a first embodiment of a vehicle light control method according to this application.

Step 201: The vehicle determines that a trigger condition is met.

In this embodiment, when the vehicle determines that the trigger condition is met, a process of performing the method in this embodiment is started, so that a beam emitted by the vehicle can display a target light pattern on a to-be-driven path.

Optionally, the vehicle determines, in a manner in which a driver enters a start instruction, that the trigger condition is met. For example, the vehicle receives the start instruction entered by the driver, where the start instruction is an instruction for displaying the target light pattern on the to-be-driven path. Optionally, the driver may enter the start instruction in a manner such as a voice input to a lighting system, a touch gesture input to a vehicle cockpit screen, or a pressing operation.

For another example, the vehicle may determine that the trigger condition may be at least one of the following:
A current speed of the vehicle is greater than or equal to a first preset value (for example, the first preset value may be 60 km/h), luminance of an environment in which the vehicle is currently located is less than or equal to a second preset value (for example, the second preset value may be 50 lux), a form of the to-be-driven path of the vehicle changes, a variation of a vehicle speed of the vehicle is greater than or equal to a third preset value, a variation of environment luminance of the vehicle is greater than or equal to a fourth preset value, remaining power of the vehicle is greater than or equal to a fifth preset value, or the like.

That the form of the driving path changes may be that the vehicle switches from a straight-through direction to a turning state, the vehicle switches from the turning state to the straight-through state, the vehicle is about to be driven to an intersection, or a dimension of a lane line on which the vehicle is driven changes (for example, a width of the lane line changes).

The variation of the vehicle speed of the vehicle may be that a vehicle speed of the vehicle obtained by the vehicle at a moment T1 is V1, and a vehicle speed obtained by the vehicle at a moment T2 is V2, where the moment T 1 is a current moment, and the moment T2 is earlier than the moment T 1. That the variation of the vehicle speed of the vehicle is greater than or equal to the third preset value may be that a difference between V2 and V1 is greater than or equal to the third preset value. For example, the preset value may be 10 km/h. It can be learned that the trigger condition is met when the variation of the vehicle speed of the vehicle is greater than or equal to 10 km/h.

For descriptions that the variation of the environment luminance of the vehicle is greater than or equal to the fourth preset value, refer to the foregoing descriptions that the variation of the vehicle speed of the vehicle is greater than or equal to the third preset value. Details are not described again.

In this embodiment, when determining, by using step 201, that the trigger condition is met, the vehicle is triggered to perform the following steps.

Step 202: The vehicle obtains navigation information.

The vehicle in this embodiment obtains the navigation information based on a navigation destination that is entered by the driver and that needs to be reached. The driver may enter the navigation destination by entering a voice to an in-vehicle navigation system, entering a touch gesture to a cockpit screen of the in-vehicle navigation system, pressing a button of the in-vehicle navigation system, or the like.

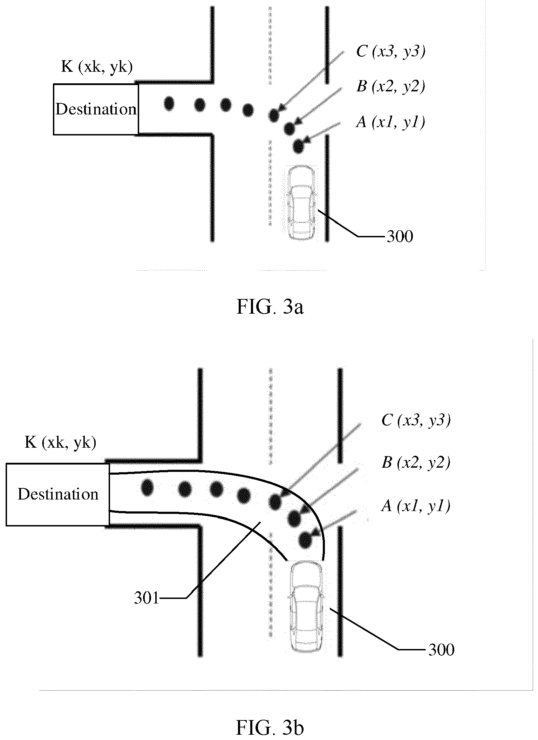

As described in this embodiment, the computer system shown in FIG. 1 may obtain navigation information from the positioning system. The navigation information may be a series of plane coordinates for the vehicle to reach the navigation destination. For example, FIG. 3a is an example diagram of a first application scenario according to this application. The navigation information described in this embodiment is a series of plane coordinates that a vehicle 300 needs to sequentially pass through in a process of driving to a destination, such as a plane coordinate A (x1, y1), a plane coordinate B (x2, y2), a plane coordinate C (x3, y3), and by analogy, a plane coordinate K (xk, yk), where the plane coordinate K (xk, yk) is a plane coordinate of the destination to which the vehicle is driven or a plane coordinate close to the destination to which the vehicle is driven. It can be learned that the vehicle can successfully reach the destination after sequentially passing through the plane coordinates included in the navigation information.

A process in which the vehicle obtains the navigation information may be that when the vehicle obtains a destination to which the vehicle needs to be driven, the vehicle may obtain GPS coordinates of a current location of the vehicle and GPS coordinates of the destination. The vehicle obtains map data, and then obtains the navigation information based on the map data, the GPS coordinates of the current location of the vehicle, and the GPS coordinates of the destination.

Step 203: The vehicle obtains information about the to-be-driven path.

The beam emitted by the vehicle in this embodiment can be displayed on the to-be-driven path. Therefore, the vehicle needs to obtain the information about the to-be-driven path. Specifically, the vehicle can determine the to-be-driven path based on the navigation information. It can be learned that FIG. 3b is an example diagram of a second application scenario according to this application. A to-be-driven path 301 described in this embodiment includes some or all plane coordinates included in the navigation information described above. A length of the to-be-driven path is not limited in this embodiment. For example, the length of the to-be-driven path may be 10 m. In this example, it indicates that the to-be-driven path includes a plane coordinate that is included in the navigation information and that is located within 10 m in front of the vehicle 300.

The information about the to-be-driven path described in this embodiment may be one or more of the following:
the form of the to-be-driven path, a dimension of the to-be-driven path, a location of an intersection included in the to-be-driven path, a state of a traffic light on the to-be-driven path, and a distance between a current location of the vehicle on the to-be-driven path and a closest intersection. The form of the to-be-driven path may be that the lane line of the to-be-driven path is a straight-through lane line, or the lane line of the to-be-driven path is a curved lane line.

For example, as shown in FIG. 3b, in a process in which the vehicle 300 is driven to a destination, the lane line of the to-be-driven path is a curved lane line. The dimension of the to-be-driven path may be the width, a length, and/or the like of the lane line of the to-be-driven path. For another example, the dimension of the to-be-driven path may alternatively be that if the lane line of the to-be-driven path is curved, the dimension of the lane line of the to-be-driven path may alternatively be a radian and/or a bending direction of the lane line of the to-be-driven path.

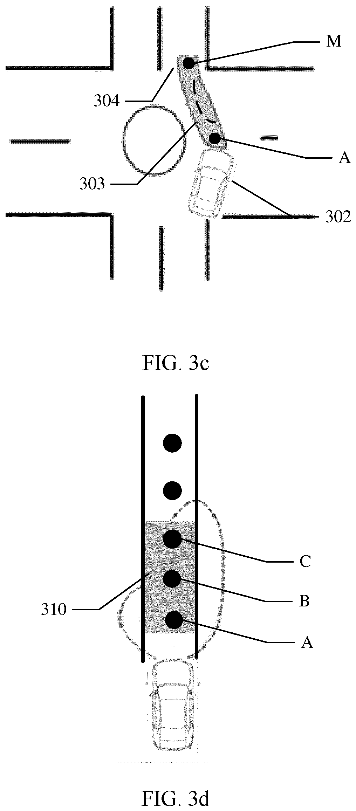

For another example, FIG. 3c is an example diagram of a third application scenario according to this application. If a to-be-driven path of a vehicle 302 is located in a multi-fork road scenario, information about the to-be-driven path may further include a location of a to-be-driven intersection 304. The distance between the current location of the vehicle on the to-be-driven path and the closest intersection may be a distance between a current location of the vehicle 302 and the to-be-driven intersection 304.

The following describes a process in which the vehicle obtains the information about the to-be-driven path in this embodiment.

The camera of the vehicle shown in FIG. 1 photographs the to-be-driven path to obtain a video stream that includes the information about the to-be-driven path. For specific descriptions of the camera, refer to FIG. 1. Details are not described again. A computer system of the vehicle receives the video stream from the camera. A processor included in the computer system extracts a video frame included in the video stream. For example, the processor may extract the video frame from the video stream at a speed of 30 frames per second. It should be noted that a speed at which the processor extracts the video frame is not limited in this embodiment. A higher speed at which the processor extracts the video frame indicates a greater capability of obtaining latest information on the to-be-driven path. However, a lower speed at which the processor extracts the video frame indicates a greater capability of reducing power consumption of the processor.

In a specific application, the processor may determine, based on a complexity degree of a current road condition, the speed of extracting the video frame. For example, if a current driving road condition is more complex (for example, the form of the to-be-driven path changes frequently, and specifically, for example, the to-be-driven path is switched from a straight-through state to a turning state, or there are a large quantity of intersections), the processor may extract the video frame at a high speed. For another example, if the current driving road condition is simpler (for example, the form of the to-be-driven path is stable, and specifically, for example, the to-be-driven path is always in the straight-through state), the processor may extract the video frame at a low speed.

After extracting the video frame, the processor may obtain the information about the to-be-driven path through analyzing based on the video frame. An analysis manner used by the processor is not limited in this embodiment. For example, the analysis manner may be an object recognition algorithm, a structure from motion (structure from motion, SFM) algorithm, video tracking, artificial intelligence (artificial intelligence, AI), or the like.

Step 204: The vehicle obtains the target light pattern.

Step 205: The beam emitted by the vehicle is displayed on the to-be-driven path by using the target light pattern.

The following describes step 204 and step 205 in a unified manner.

In this embodiment, after obtaining the navigation information and the information about the to-be-driven path, the vehicle may obtain the target light pattern corresponding to the navigation information and the information about the driving path. Specifically, the vehicle may obtain one or more first display attributes corresponding to the navigation information. Then, the vehicle obtains one or more second display attributes corresponding to the information about the to-be-driven path. In this case, the vehicle determines that a light pattern having both the first display attribute and the second display attribute is the target light pattern.

After the vehicle obtains the target light pattern, the vehicle emits the beam based on the target light pattern, to ensure that the beam emitted by the vehicle can be displayed on the to-be-driven path by using the target light pattern. In this embodiment, a distance between the target light pattern displayed on the to-be-driven path and the vehicle is not limited, provided that the driver in the vehicle can clearly see the target light pattern displayed in front of the vehicle. For example, the distance between the target light pattern and the vehicle may be 10 m.

The following describes the target light pattern in this embodiment.

In this embodiment, the vehicle determines the first display attribute based on the plane coordinates included in the navigation information. Specifically, the vehicle obtains the to-be-driven path, where the to-be-driven path includes an i^{th} plane coordinate to a j^{th} plane coordinate in M coordinates, both i and j are positive integers, i is greater than or equal to 1, and j is greater than i and less than or equal to M.

As shown in FIG. 3b, the M plane coordinates may be the plane coordinate A, the plane coordinate B, the plane coordinate C, and so on. Further, as shown in FIG. 3c, the vehicle determines, based on the navigation information, that all plane coordinates included between the current location of the vehicle and the to-be-driven intersection 304 of the vehicle are the M plane coordinates (for example, the plane coordinate A to the plane coordinate M shown in FIG. 3c). It can be learned that the vehicle is driven sequentially through the M plane coordinates, and can be driven to the intersection 304 closest to the vehicle. The vehicle determines the first display attribute based on the M plane coordinates. For a specific determining process, refer to a first driving list shown in the following Table 1. Correspondences between different extension directions of the M plane coordinates and different first display attributes are established in the first driving list.

**Table 1**

| Different extension directions of the M plane coordinates | First display attribute |
|---|---|
| The M plane coordinates extend along a straight line direction | Rectangular shape |
| The M plane coordinates extend along an arc-shaped direction | Arc shape |

It can be learned that with reference to Table 1 and FIG. 3d, where FIG. 3d is an example diagram of a fourth application scenario according to this application, if the M plane coordinates extend along the straight line direction, the vehicle determines that the first display attribute is the rectangular shape. For another example, with reference to Table 1 and FIG. 3b, if the M plane coordinates extend along the arc-shaped direction, the vehicle determines that the first display attribute is the arc shape.

The vehicle then determines the second display attribute based on the to-be-driven path. The second display attribute may be one or more of the following:
For example, the vehicle determines the second display attribute based on the dimension of the to-be-driven path. For example, the second display attribute is a width, and the width included in the second display attribute is equal to the width of the lane line of the to-be-driven path. In this embodiment, descriptions of a relationship between the width included in the second display attribute and the width of the lane line of the to-be-driven path are optional examples. For another example, the width included in the second display attribute may alternatively be less than the width of the lane line. For another example, the width included in the second display attribute may alternatively be greater than the width of the lane line or the like. This is not specifically limited.

For another example, the second display attribute determined by the vehicle is a length. For example, the length indicated by the second display attribute is a length between a first location and a second location, where the first location is the current location of the vehicle, and the second location is a location that is included in the navigation information and that is of the intersection closest to the vehicle. The second location may be a location that is collected by the vehicle and that is of a traffic light closest to the vehicle on the to-be-driven path.

For another example, if the vehicle determines that the first display attribute is the arc shape, the second display attribute includes a bending direction. Specifically, as shown in FIG. 3b, the vehicle determines, based on the radian of the lane line 301 of the to-be-driven path, the bending direction included in the second display attribute, to ensure that the bending direction included in the second display attribute is consistent with the bending direction of the lane line of the to-be-driven path.

When the vehicle has determined the first display attribute and the second display attribute, the vehicle determines that the light pattern having both the first display attribute and the second display attribute is the target light pattern. As shown in FIG. 3d, when the first display attribute is the rectangular shape, and the second display attribute is the width (for example, the width of the lane line is 3.5 m) of the lane line of the to-be-driven path, it can be learned that a shape of the target light pattern is a rectangle, and a width of the rectangle is 3.5 m.

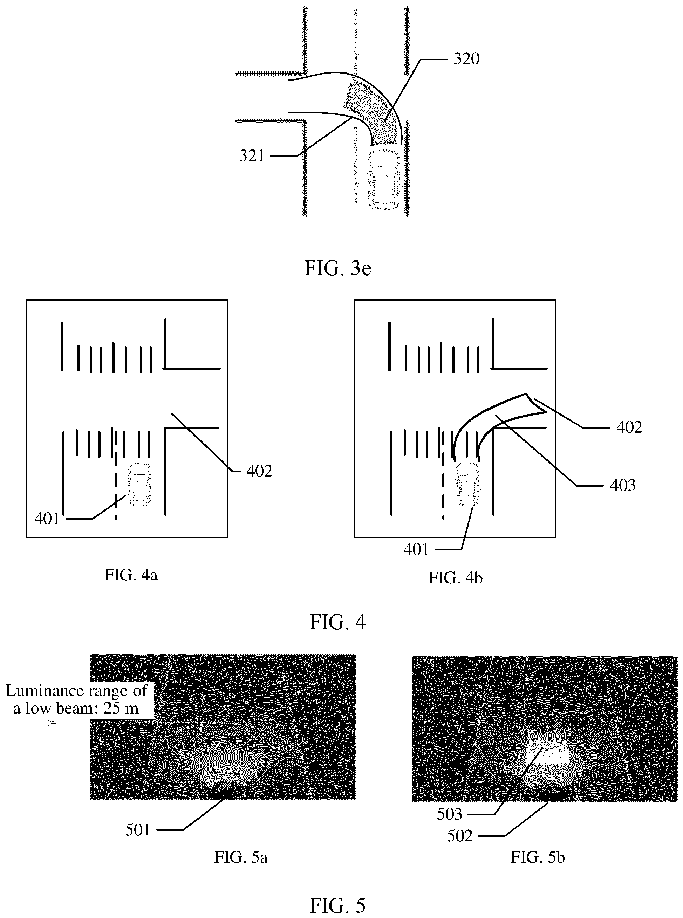

FIG. 3e is an example diagram of a fifth application scenario according to this application. When the first display attribute is the arc shape, and the bending direction included in the second display attribute is consistent with the bending direction of the to-be-driven path, it can be learned that the target light pattern having the second display attribute is in an arc shape, and the bending direction is consistent with a bending direction of a to-be-driven path 321.

The following optionally describes a manner in which the target light pattern is displayed on the to-be-driven path.

Along an extension direction of the to-be-driven path, a center line of the target light pattern may coincide with a center line of the to-be-driven path, or an offset between the center line of the target light pattern and the center line of the to-be-driven path may be less than or equal to a first distance. It can be learned that the display manner of the target light pattern is used to ensure that the target light pattern can be accurately displayed on the to-be-driven path. Alternatively, when the width included in the second display attribute is equal to the width of the lane line of the to-be-driven path, along a transverse direction of the to-be-driven path, boundary lines on two sides of the target light pattern coincide with boundary lines of the lane line of the to-be-driven path, or an offset between the boundary lines on the two sides of the target light pattern and the lane line of the to-be-driven path is less than or equal to a second distance. Alternatively, when the length indicated by the second display attribute is the length between the first location and the second location, along the extension direction of the to-be-driven path, upper and lower boundary lines of the target light pattern respectively coincide with the first location and the second location.

When the target light pattern is displayed on the to-be-driven path, the target light pattern can indicate a region occupied by the vehicle in a driving process. It can be learned from the target light pattern 310 shown in FIG. 3d that the vehicle is driven to a lane location occupied by the target light pattern 310. It can also be learned from the target light pattern 321 shown in FIG. 3e that the vehicle is driven to a lane location occupied by the target light pattern 321. It can be learned that the target light pattern displayed on the to-be-driven path by using the beam emitted by the vehicle helps improve navigation accuracy, and can implement illumination on the to-be-driven path, thereby ensuring safety in a process in which the vehicle is driven based on navigation. For example, FIG. 4 is an example diagram of application scenario comparison according to this application.

A vehicle can learn from a navigation map that the vehicle needs to turn right at a next intersection. FIG. 4a is an example diagram of a specific road condition in which a vehicle turns right according to an existing solution. It can be learned from FIG. 4a that although a vehicle 401 determines, based on in-vehicle navigation, that the vehicle 401 needs to turn right at a next intersection, that is, an intersection 402, the vehicle 401 is still in a straight-through state. Light (for example, light emitted by a low beam light of the vehicle) emitted by the vehicle can illuminate only a limited region in front of the vehicle 401, and cannot illuminate a to-be-driven intersection 402 of the vehicle.

For the method in this embodiment, refer to FIG. 4b. FIG. 4b is an example diagram of a specific road condition in which a vehicle turns right according to this application. When it is determined that a to-be-driven path is to turn right at an intersection 402, a target light pattern 403 may be determined. For a process of determining the target light pattern 403, refer to the foregoing descriptions, and details are not described again. It can be learned that the target light pattern 403 can illuminate the intersection 402 based on the to-be-driven path of the vehicle 401, to ensure safety when a user drives the vehicle 401 to turn and drive through the intersection 402.

For another example, FIG. 5 is a second example diagram of application scenario comparison according to this application. In an example shown in FIG. 5a, FIG. 5a is an example diagram of illumination of a vehicle low beam light according to an existing solution. In the existing solution, when a vehicle 501 is in a scenario (for example, at night, on a cloudy day, or on a rainy day) with low environment luminance or the like, an illumination range of light emitted by a low beam light of the vehicle 501 is small. In a scenario shown in FIG. 5a, the light emitted by the low beam light of the vehicle 501 can implement illumination only within 25 m in front of the vehicle 501.

For the method in this embodiment, refer to FIG. 5b. FIG. 5b is an example diagram of illumination of a target light pattern according to this application. For example, a target light pattern 503 displayed on a to-be-driven path in front of a vehicle 502 has a length of 20 m, a width of 3.5 m, and a shape of a rectangle. It can be learned that the target light pattern 503 in this embodiment is formed by a beam that is emitted by the vehicle 502 and that is directly irradiated on the to-be-driven path, and luminance of the target light pattern 503 is greater than luminance of illuminating the path by the light emitted by the low beam light shown in the existing solution. Because the target light pattern 503 has illuminated the to-be-driven path, a driver drives based on a region illuminated by the target light pattern 503, thereby improving driving safety. In addition, another person or vehicle on the path can quickly determine, based on a prompt of the target light pattern 503, a location at which the vehicle 503 is about to be driven. This facilitates avoidance of the another person or vehicle on the path, thereby improving the driving safety.

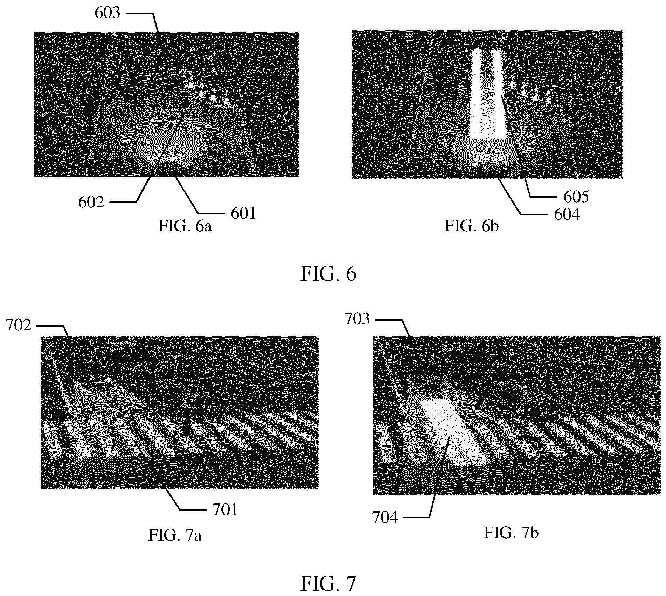

For another example, FIG. 6 is a third example diagram of application scenario comparison according to this application. In a driving process of a vehicle, a scenario in which a width of a lane line changes is often encountered. FIG. 6a is an example diagram of illumination of a vehicle low beam light when a width of a lane line changes according to an existing solution. There is a case in which a width of a lane line of a path in front of a vehicle 601 is suddenly narrowed, that is, a width 602 of the lane line is greater than a width 603 of the lane line. If a driver cannot accurately determine the change of the width of the lane line, a driving hazard easily occurs.

For the method in this embodiment, refer to FIG. 6b. FIG. 6b is an example diagram of illumination of a target light pattern when a width of a lane line changes according to this application. A target light pattern 605 formed in front of a vehicle 604 can accurately illuminate a path in front, and a width of the target light pattern 605 may be equal to a narrowest width of a lane line. A driver can accurately determine, based on the to-be-driven path illuminated by the target light pattern, a case in which the lane line is suddenly narrowed. This improves driving safety.

For another example, FIG. 7 is fourth example diagram of application scenario comparison according to this application. Specifically, FIG. 7a is an example diagram of illumination provided when a vehicle low beam light illuminates a zebra crossing according to an existing solution. In a process in which a vehicle 702 is driven to a zebra crossing 701, a pedestrian on the zebra crossing 701 should not cross the zebra crossing under an indication of a red light, and the vehicle 702 should cross the zebra crossing under an indication of a green light. However, because the pedestrian has a weak safety awareness, the pedestrian continues to cross the zebra crossing under the indication of the red light. If the vehicle 702 cannot avoid the pedestrian, a safety accident occurs.

FIG. 7b uses the method in this embodiment. FIG. 7b is an example diagram of illumination provided when a target light pattern illuminates a zebra crossing according to this application. A vehicle 703 can form a target light pattern 704 on a zebra crossing of a to-be-driven path, and the target light pattern 704 can illuminate the zebra crossing. When walking on the zebra crossing, a pedestrian notices the target light pattern 704. This helps the pedestrian avoid the vehicle 703 on the zebra crossing. In addition, because the target light pattern 704 can illuminate the zebra crossing, the zebra crossing does not become a blind spot of a driver, thereby effectively avoiding a possibility of a safety accident between the vehicle 703 and the pedestrian.

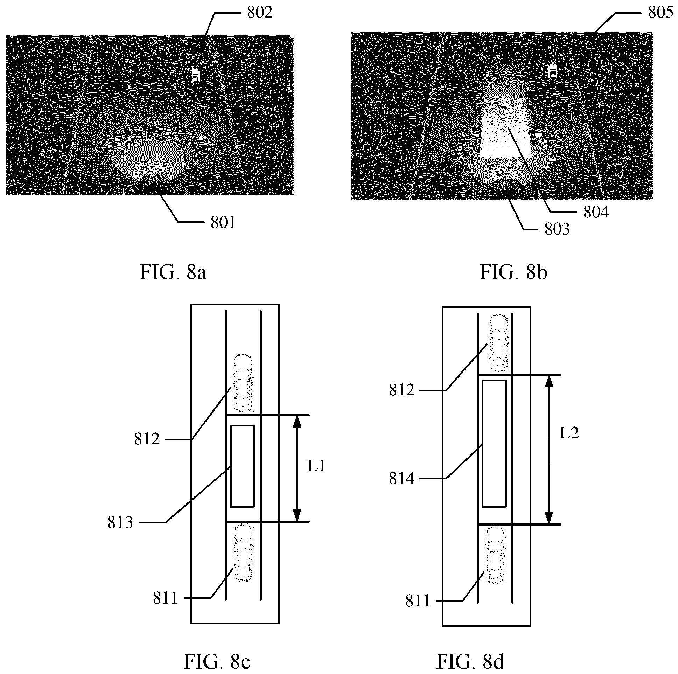

For another example, FIG. 8a is an example diagram of illumination provided when a vehicle low beam light illuminates the front of a vehicle according to an existing solution. In a driving process of a vehicle 801, if a target 802 appears in front of the vehicle 801, the target 802 may be any other vehicle, a non-motor vehicle, a pedestrian, or the like. In the driving process of the vehicle 801, neither the vehicle 801 nor the target 802 in front of the vehicle 801 determines whether the vehicle 801 collides with the target 802 in the driving process, that is, whether the target 802 is located outside a safe distance of the vehicle 801.

FIG. 8b shows the method in this embodiment. FIG. 8b is an example diagram of illumination provided when a target light pattern illuminates the front of a vehicle according to this application. A vehicle 803 can form a target light pattern 804 on a to-be-driven path, where a width of the target light pattern 804 is equal to a width of the vehicle 803, and the target light pattern 804 can indicate a width occupied by the vehicle 803 when the vehicle 803 is driven to a region of the target light pattern 804. It can be learned that a target 805 can determine a driving range of the vehicle 803 based on a clear boundary of the target light pattern 804. If the target 805 appears within the target light pattern 804, it indicates that the target 805 is within a safe distance of the vehicle 804, and there is a high probability that a safety accident occurs between the vehicle 804 and the target 805. If the target 805 appears outside the target light pattern 804, it indicates that the target 805 is outside the safe distance of the vehicle 804, and there is a low probability that the safety accident occurs between the vehicle 805 and the target 805.

It should be noted that the descriptions of the target light pattern in this embodiment are optional examples, and are not limited. In another example, the target light pattern may be further related to data (for example, a vehicle speed) from vehicle state. In this case, a pedestrian, a vehicle, or the like around the vehicle can determine the vehicle speed based on the target light pattern.

Specifically, there is a positive correlation between a length of the target light pattern and the vehicle speed. To be specific, a higher vehicle speed indicates a longer length of the target light pattern, and a lower vehicle speed indicates a shorter length of the target light pattern. The vehicle may store a corresponding list between the vehicle speed and the target light pattern shown in Table 2 below.

**Table 2**

| Vehicle speed | Length of the target light pattern |
|---|---|
| Greater than 120 km/h | 60 m to 80 m |
| 120 km/h to 80 km/h | 50 m to 60 m |
| 80 km/h to 60 km/h | 40 m to 50 m |
| 60 km/h to 40 km/h | 20 m to 40 m |
| 40 km/h to 20 km/h | 10 m to 20 m |
| 20 km/h to 0 km/h | 0 m to 10 m |

For example, if the vehicle determines that the vehicle speed is 70 km/h, the vehicle may determine that a length of a corresponding target light pattern is 45 m. For another example, if the vehicle determines that the vehicle speed is greater than 120 km/h, the vehicle may determine that a length of a corresponding target light pattern is 80 m. It should be noted that the descriptions of a correspondence between the vehicle speed and the length of the target light pattern in this embodiment are merely examples, and are not limited, provided that the vehicle speed can be determined based on the length of the target light pattern.

The length of the target light pattern in this embodiment may be further in a dynamic relationship with the vehicle speed. Specifically, the vehicle obtains the vehicle speed, and obtains, according to the following formula 1, the target light pattern corresponding to the vehicle speed:
Formula 1: Length L of the target light pattern=50+[(120-current vehicle speed)/40]x10

It can be learned that the vehicle may obtain the length of the corresponding target light pattern by substituting the current vehicle speed into the formula 1. It should be noted that the descriptions of the formula 1 described in this embodiment are optional examples, and are not limited, provided that the vehicle can create, based on the formula 1, linear relationships between different vehicle speeds and lengths of different target light patterns.

Optionally, in this embodiment, the vehicle may periodically substitute the current vehicle speed of the vehicle into the formula 1. In a case in which the vehicle determines that a variation of the vehicle speed is greater than or equal to a preset value, the current vehicle speed of the vehicle is substituted into the formula 1, and the like. Specifically, a vehicle speed of the vehicle obtained by the vehicle at a moment T1 is V1, and a vehicle speed obtained by the vehicle at a moment T2 is V2, where the moment T 1 is a current moment, and the moment T2 is earlier than the moment T 1. That the variation of the vehicle speed of the vehicle is greater than or equal to the preset value may be that a difference between V2 and V1 is greater than or equal to the preset value. For example, the preset value may be 10 km/h. It can be learned that the length of the target light pattern is obtained according to the formula 1 when the variation of the vehicle speed of the vehicle is greater than or equal to 10 km/h.

Optionally, the light that is displayed on the ground by using the target light pattern and that is in this embodiment may further have a specific flash frequency. For the flash frequency, refer to at least one of the following examples:
For example, there is a positive correlation between the vehicle speed of the vehicle and the flash frequency. To be specific, the higher vehicle speed indicates a higher flash frequency, and the lower vehicle speed indicates a lower flash frequency. For another example, if the form of the to-be-driven path changes, the light displayed on the ground by using the target light pattern has the flash frequency.

That the form of the driving path changes may be that the to-be-driven path of the vehicle indicates the vehicle to switch from the straight-through state to the turning state, the to-be-driven path of the vehicle indicates to switch from the turning state to the straight-through state, the to-be-driven path of the vehicle indicates that the vehicle is about to be driven to the intersection, or the to-be-driven path of the vehicle indicates that the dimension of the lane line changes (for example, the width of the lane line changes). For another example, the target light pattern of the vehicle is displayed on the zebra crossing. For another example, an obstacle (for example, a pedestrian or another vehicle) appears in a range of the target light pattern of the vehicle. For another example, there is a negative correlation between the flash frequency of the vehicle and environment luminance. To be specific, lower environment luminance indicates a higher flash frequency, and higher environment luminance indicates a lower flash frequency.

Optionally, for luminance of the target light pattern in this embodiment, refer to at least one of the following examples:
For example, there is a positive correlation between the vehicle speed of the vehicle and luminance of the light displayed on the ground by using the target light pattern. To be specific, the higher vehicle speed indicates higher luminance, and the lower vehicle speed indicates lower luminance. For another example, a larger degree of change of the form of the to-be-driven path indicates higher luminance, and a smaller degree of change of the form of the to-be-driven path indicates lower luminance. For example, a structure of the to-be-driven path has a radian, a larger radian indicates higher luminance, and a smaller radian indicates lower luminance. For another example, luminance of the light emitted by the vehicle matches the environment luminance, to ensure that the driver can be reminded without excessive stimulation to eyes of the driver. For another example, luminance provided when the to-be-driven path changes is greater than luminance provided when the to-be-driven path does not change. To be specific, luminance provided when the to-be-driven path is always in the straight-through state is less than luminance that is of light emitted by a vehicle light and that is provided when the to-be-driven path turns. For another example, luminance that is of the light emitted by the vehicle light and that is provided when the to-be-driven path of the vehicle indicates that the dimension of the lane line changes is greater than luminance that is of the light emitted by the vehicle light and that is provided when the to-be-driven path indicates that the dimension of the lane line does not change. For another example, luminance provided when the light emitted by the vehicle light is displayed on the zebra crossing by using the target light pattern is greater than luminance provided when the light emitted by the vehicle light is not displayed on the zebra crossing by using the target light pattern. For another example, when the obstacle (for example, the pedestrian or the another vehicle) appears in the range of the target light pattern of the vehicle, luminance of the light emitted by the vehicle light is greater than luminance that is of the light emitted by the vehicle light and that is provided when no obstacle appears in the range of the target light pattern of the vehicle.

Optionally, the target light pattern in this embodiment is further related to a distance between the vehicle and a vehicle in front. The vehicle in front is located directly in front of or diagonally in front of the vehicle. With reference to FIG. 8c and FIG. 8d, an example in which the vehicle in front is located directly in front of the vehicle is used. For example, as shown in FIG. 8c, a distance between a vehicle 811 and a vehicle 812 in front is L1. In FIG. 8d, a distance between the vehicle 811 and the vehicle 812 in front is L2, and L1 is less than L1. A target light pattern displayed by the vehicle 811 in this example is located on a path between the vehicle 811 and the vehicle 812 in front. To be specific, in an example shown in FIG. 8c, a target light pattern 813 is located on the path between the vehicle 811 and the vehicle 812 in front. In an example shown in FIG. 8d, a target light pattern 814 is located on the path between the vehicle 811 and the vehicle 812 in front.

There is a positive correlation between the length of the target light pattern in this embodiment and the distance between the vehicle and the vehicle in front. To be specific, a larger distance between the vehicle and the vehicle in front indicates a longer length of the target light pattern. Upon comparison between FIG. 8c and FIG. 8d, it can be learned that when the distance L2 between the vehicle 811 and the vehicle 812 in front shown in FIG. 8d is greater than the distance L1 between the vehicle 811 and the vehicle 812 in front shown in FIG. 8c, a length of the target light pattern 814 shown in FIG. 8d is greater than a length of the target light pattern 813 shown in FIG. 8c. It should be understood that, when the distance between the vehicle and the vehicle in front is large enough, for example, when the distance reaches 150 m or more, the length of the target light pattern remains unchanged.

It should be noted that this embodiment is described by using an example in which there is the positive correlation between the length of the target light pattern and the distance between the vehicle and the vehicle in front. In another example, further, there may be a negative correlation between the distance between the vehicle and the vehicle in front and the luminance of the light displayed on the ground by using the target light pattern. To be specific, a shorter distance between the vehicle and the vehicle in front indicates higher luminance, and a longer distance between the vehicle and the vehicle in front indicates lower luminance. For another example, there is a negative correlation between the distance between the vehicle and the vehicle in front and the flash frequency of the light displayed on the ground by using the target light pattern. To be specific, the shorter distance between the vehicle and the vehicle in front indicates a higher flash frequency, and the longer distance between the vehicle and the vehicle in front indicates a lower flash frequency. Similarly, when the distance between the vehicle and the vehicle in front is large enough, for example, when the distance reaches 150 m or more, the luminance may remain unchanged, and the flash frequency may also remain unchanged or there is no flash.

Step 206: If the vehicle determines that the target light pattern meets a recalibration condition, return to perform step 203.

Step 206 in this embodiment is an optional step. The target light pattern displayed by the vehicle on the to-be-driven path can be calibrated by performing step 206. When the target light pattern is inaccurate, the vehicle needs to return to perform step 203, to re-calibrate the target light pattern, that is, re-obtain the target light pattern. When the target light pattern does not meet the recalibration condition, it indicates that the target light pattern is accurate, and the target light pattern does not need to be re-obtained. In this case, when driven to the foregoing to-be-driven path, the vehicle may obtain a target light pattern that needs to be displayed on a next to-be-driven path.

To implement an objective of determining, by the vehicle, whether the target light pattern meets the recalibration condition, the vehicle needs to perform the following specific process.

First, the vehicle recaptures a calibrated image by using the camera of the vehicle, where the calibrated image includes the foregoing determined to-be-driven path and the target light pattern displayed on the to-be-driven path.

Then, the vehicle determines, based on the calibrated image, whether the target light pattern meets the recalibration condition. Specifically, when determining that the calibrated image meets at least one of the following conditions, the vehicle determines that the target light pattern meets the recalibration condition:
The vehicle determines that the center line of the target light pattern deviates from the lane center line of the to-be-driven path; along the transverse direction of the to-be-driven path, when the width of the target light pattern needs to be equal to the width of the lane line of the to-be-driven path, along the transverse direction of the to-be-driven path, the boundary lines on the two sides of the target light pattern deviate from the boundary lines on the two sides of the lane line; when the bending direction of the target light pattern needs to be consistent with the bending direction of the to-be-driven path, the bending direction of the target light pattern is inconsistent with the bending direction of the to-be-driven path; or the like.

It should be noted that, in this embodiment, descriptions of a process in which the vehicle determines, based on the calibrated image, whether the target light pattern meets the recalibration condition are optional examples, and are not limited, provided that the vehicle can accurately determine, based on the calibrated image, whether the target light pattern can assist the driver in navigation and improve the driving safety.

It can be learned that, according to the method in this embodiment, the target light pattern that is displayed on the to-be-driven path and that is of the beam emitted by the vehicle can match the navigation information of the vehicle, to improve the driving safety based on the target light pattern.

### Embodiment 2

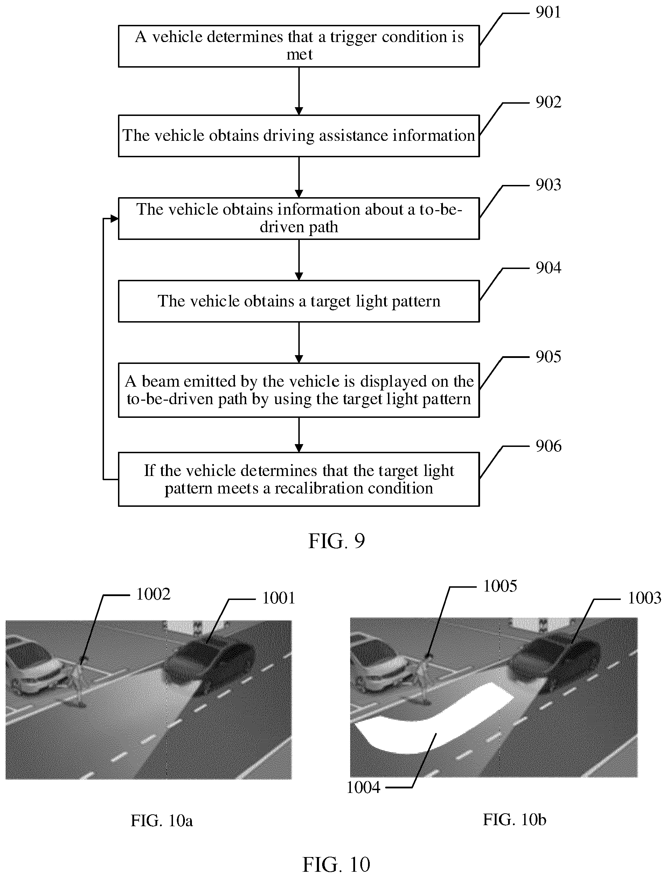

In the embodiment 1, the target light pattern is related to the navigation information, that is, the target light pattern changes with the navigation information. However, a target light pattern in this embodiment is related to driving assistance information, that is, the target light pattern changes with the driving assistance information. A specific execution process is shown with reference to FIG. 9. FIG. 9 is a flowchart of steps of a second embodiment of a vehicle light control method according to this application.

Step 901: A vehicle determines that a trigger condition is met.

For an execution process of step 901 in this embodiment, refer to step 201 shown in the embodiment 1. Details are not described again.

Step 902: The vehicle obtains driving assistance information.

The driving assistance information in this embodiment is related information for implementing self-driving. In this embodiment, the driving assistance information is information from an ADAS of the vehicle. For specific descriptions of the ADAS, refer to the related descriptions in FIG. 1. Details are not described again.

Step 903: The vehicle obtains information about a to-be-driven path.

For specific descriptions of step 902 in this embodiment, refer to step 203 shown in the embodiment 1. Details are not described again.

Step 904: The vehicle obtains a target light pattern.

Step 905: A beam emitted by the vehicle is displayed on the to-be-driven path by using the target light pattern.

The following describes step 904 and step 905 in a unified manner.

In this embodiment, after obtaining the driving assistance information and the information about the to-be-driven path, the vehicle may obtain the target light pattern corresponding to the driving assistance information and the information about the driving path. Specifically, the vehicle may obtain one or more first display attributes corresponding to the driving assistance information. Then, the vehicle obtains one or more second display attributes corresponding to the information about the to-be-driven path. The vehicle determines that a light pattern having both the first display attribute and the second display attribute is the target light pattern. For descriptions of the second display attribute, refer to the embodiment 1. Details are not described again.

The vehicle emits the beam based on the target light pattern, to ensure that the beam emitted by the vehicle can be displayed on the to-be-driven path by using the target light pattern. For descriptions of a manner of displaying the target light pattern on the to-be-driven path in this embodiment, refer to the embodiment 1. Details are not described again. A distance between the target light pattern displayed on the to-be-driven path and the vehicle is not limited, provided that a driver in the vehicle can clearly see the target light pattern displayed in front of the vehicle. For example, the distance between the target light pattern and the vehicle may be 10 m.

The driving assistance information in this embodiment is a driving decision that is from the ADAS, and the vehicle can determine different first display attributes based on different driving decisions of the ADAS. The following describes different first display attributes corresponding to different driving decisions of the ADAS with reference to specific examples.

### Example 1

The vehicle determines correspondences between different driving decisions of the ADAS and different first display attributes based on a second driving list. In this example, that the driving decision is a driving intention of the vehicle is used as an example. The driving intent shown in this example is a direction in which the vehicle is about to be driven. For the second driving list shown in this example, refer to the following Table 3. Correspondences between different driving intentions and different first display attributes are created in the second driving list shown in Table 3.

It should be noted that descriptions of content of the second driving list in this embodiment are optional examples, and are not limited, provided that the first display attribute of the light (which may also be referred to as a light carpet) displayed on a ground by using the target light pattern changes with the driving intentions determined by the ADAS.

**Table 3**

| Driving intention | First display attribute |
|---|---|
| Straight-through | The light carpet is in a rectangular shape |
| Change a lane | The light carpet has a flash frequency |
| | Luminance of the light carpet is increased |
| Turn | The light carpet is in an arc shape |
| Enter a fork | The light carpet is in an arc shape |

It should be noted that a quantity of first display attributes corresponding to each driving intention is not limited in this embodiment. For example, that, as shown in Table 3, the driving intention "straight-through" corresponds to one first display attribute (that is, the light carpet is in a rectangular shape), and the driving intention "change a lane" corresponds to two first display attributes (that is, the light carpet has a flash frequency and luminance of the light carpet is increased) is merely an example. In a specific application, if one driving intention corresponds to a plurality of first display attributes, the plurality of first display attributes are superimposed on a light carpet corresponding to the driving intention.

For example, based on the second driving list shown in Table 3, it can be learned that, if the ADAS indicates a computer system of the vehicle that the driving decision of the ADAS is to change the lane, the computer system obtains, based on Table 3, that the corresponding first display attribute is that the light carpet has the flash frequency and the luminance of the light carpet is increased. It can be learned that, in a lane change process of the vehicle, the light carpet prompts, by using the first display attribute of the light carpet, a surrounding vehicle or a pedestrian that the vehicle is about to change the lane.

For another example, based on the second driving list shown in Table 3, if the ADAS indicates the computer system of the vehicle that the driving decision of the ADAS is to turn, the computer system obtains, based on Table 3, that the corresponding first display attribute is that the light carpet is in the arc shape. A bending direction and a radian of the arc shape may be specifically obtained based on the second display attribute. For descriptions of a process of how to determine the bending direction and the radian of the arc-shaped light carpet based on the to-be-driven path, refer to the embodiment 1. Details are not described again. For a better understanding, the following provides descriptions with reference to FIG. 10. FIG. 10 is a sixth example diagram of application scenario comparison according to this application. In an example shown in FIG. 10a, FIG. 10a is an example diagram of illumination provided when a vehicle drives backwards into a parking lot according to an existing solution. A vehicle 1001 shown in the existing solution is in an autonomous driving state, and the vehicle 1001 needs to turn to drive backwards into a parking lot. In a scenario in which a person 1002 or another vehicle exists around the vehicle 1001, the person 1002 cannot determine a driving intention of the vehicle 1001, and consequently a dangerous case easily occurs.

For the method in this embodiment, refer to FIG. 10b. FIG. 10b is an example diagram of illumination provided by a light carpet when a vehicle drives backwards into a parking lot according to this application. The ADAS indicates that the driving intention is to turn right to drive backwards into the parking lot. The vehicle determines the second display attribute based on the first display attribute corresponding to the driving intention of turning (as shown in Table 3, the light carpet is in the arc shape) and also based on the collected to-be-driven path, so that an arc-shaped light carpet 1004 can be displayed on a to-be-driven path of a vehicle 1003. Based on a bending direction of the light carpet 1004, a person 1005 can accurately determine a driving intention of the vehicle 1003, so that the person 1005 is prevented from appearing in a region occupied by the light carpet 1004, and a possibility of a safety accident between the person 1005 and the vehicle 1003 is avoided.

### Example 2

The vehicle determines correspondences between different driving decisions of the ADAS and different first display attributes based on a third driving list. In this example, that the driving decision is an emergency decision of the vehicle is used as an example, and the emergency decision may be emergency braking of the vehicle, emergency avoidance, vehicle failure, or the like. For the third driving list shown in this example, refer to the following Table 4. Correspondences between different emergency decisions and different first display attributes are created in the third driving list shown in Table 4.

It should be noted that descriptions of content of the third driving list in this embodiment are optional examples, and are not limited, provided that a first display attribute of a light carpet changes with each emergency decision determined by the ADAS.

**Table 4**

| Emergency decision | First display attribute |
|---|---|
| Emergency braking | The light carpet has a first flash frequency |
| | A shape of the light carpet changes |
| | The light carpet has first luminance |
| Emergency avoidance | The light carpet has a second flash frequency |
| Vehicle failure | The light carpet has second luminance |

It should be noted that a quantity of first display attributes corresponding to each emergency decision is not limited in this embodiment. For example, that, as shown in Table 3, the emergency avoidance corresponds to one first display attribute (that is, the light carpet has a second flash frequency), and the emergency braking corresponds to three first display attributes (that is, the light carpet has a first flash frequency, a shape of the light carpet changes, and the light carpet has first luminance) is merely an example. In a specific application, if one emergency braking corresponds to a plurality of first display attributes, the plurality of first display attributes are superimposed on a light carpet corresponding to the emergency decision.

Specific values of the first flash frequency and the second flash frequency that are shown in Table 4 are not limited in this embodiment. For example, in a normal driving process (for example, straight-through or turning) of the vehicle, the light carpet does not have a flash frequency. In a case of emergency braking or emergency avoidance of the vehicle, the light carpet has a flash frequency.

Specific luminance of the first luminance and the second luminance that are shown in Table 4 are not limited. For example, both the first luminance and the second luminance may be greater than luminance of the light carpet in the normal driving process of the vehicle.

A specific change manner of the shape change of the light carpet shown in Table 4 is not limited in this embodiment, provided that the shape change of the light carpet can remind a pedestrian or another vehicle around the vehicle that the vehicle is currently in an "emergency braking" state. For example, the shape change of the light carpet may be that a length of the light carpet is shortened, a width of the light carpet is widened, or the like. This is not specifically limited.

For example, based on the third driving list shown in Table 4, it can be learned that, if the ADAS indicates a computer system of the vehicle that the emergency decision of the ADAS is the emergency braking, the computer system obtains, based on Table 4, that the corresponding first display attribute is that the light carpet has the first flash frequency, the shape of the light carpet changes, and the light carpet has the first luminance. It can be learned that, in a process of emergency braking of the vehicle, the light carpet prompts, by using the foregoing first display attribute of the light carpet, the surrounding pedestrian or the vehicle that the vehicle is about to brake urgently.

### Example 3

The vehicle determines correspondences between different driving decisions of the ADAS and different first display attributes based on a fourth driving list. In this example, that the driving decision is a vehicle driving prediction event is used as an example, where the vehicle driving prediction event is prediction performed by the ADAS on an event that may occur on the vehicle. For example, the vehicle driving prediction event is that the vehicle is in a safe state, the vehicle is in a dangerous state, that is, a safety accident may occur on the vehicle, or the like. For the fourth driving list shown in this example, refer to the following Table 5. Correspondences between different vehicle driving prediction events and different first display attributes are created in the fourth driving list shown in Table 5.

It should be noted that descriptions of content of the fourth driving list in this embodiment are optional examples, and are not limited, provided that a first display attribute of a light carpet changes with each vehicle driving prediction event determined by the ADAS.

**Table 5**

| Vehicle driving prediction event | First display attribute |
|---|---|
| The vehicle is in the safe state | The light carpet has third luminance |
| The vehicle is in the dangerous state | The light carpet has fourth luminance |
| | The light carpet has a third flash frequency |

It should be noted that a quantity of first display attributes corresponding to each vehicle driving prediction event is not limited in this embodiment. For example, that, as shown in Table 5, a prediction event that the vehicle is in the dangerous state corresponds to two first display attributes, and a prediction event that the vehicle is in the safe state corresponds to one first display attribute is merely an example. In a specific application, if one vehicle driving prediction event corresponds to a plurality of first display attributes, the plurality of first display attributes are superimposed on a light carpet corresponding to the vehicle driving prediction event.

Specific values of the third luminance and the fourth luminance that are shown in Table 5 are not limited in this embodiment. To remind a vehicle and a pedestrian around the vehicle of the prediction event that the vehicle is about to be in the dangerous state, the fourth luminance of the light carpet when the vehicle is in the dangerous state is greater than the third luminance of the light carpet when the vehicle is in the safe state.

A specific value of the third flash frequency is not limited in this embodiment. For example, in a normal driving process (for example, straight-through or turning) of the vehicle, the light carpet does not have a flash frequency. The carpet has the third flash frequency in the prediction event that the vehicle is in the dangerous state.

In this embodiment, descriptions of specific types of the first display attributes corresponding to different vehicle driving prediction events are optional examples, and are not limited. For example, in another example, the vehicle driving prediction event may further correspond to a form, a change manner, or the like of the light carpet. This is not specifically limited.

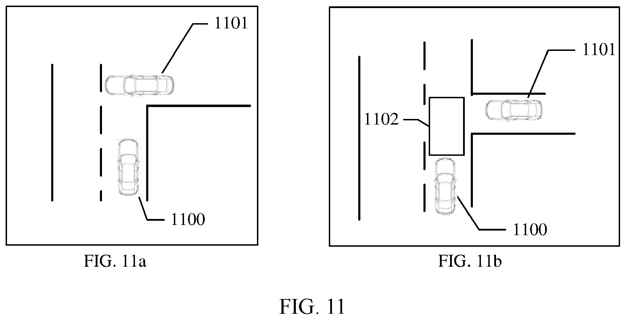

For a better understanding, the following provides descriptions with reference to an example shown in FIG. 11. FIG. 11 is a seventh example diagram of application scenario comparison according to this application.

Specifically, it can be learned that FIG. 11a is an example diagram of illumination provided when a vehicle is in a dangerous state according to an existing solution. A vehicle 1100 is about to be driven to an intersection. An ADAS of the vehicle 1100 determines that a target vehicle 1101 on a right side of the intersection is also about to enter the intersection. The ADAS of the vehicle 1100 determines whether the vehicle is in a safe state. The safe state is that the vehicle 1100 does not collide with the target vehicle 1101 when driven to the intersection. Therefore, the ADAS of the vehicle 1100 determines, based on a vehicle speed of the vehicle 1100, a vehicle speed of the target vehicle 1101, and a distance between the vehicle 1100 and the target vehicle 1101, that the vehicle 1100 is in the safe state. It can be learned from Table 5 that, in this case, a light carpet of the vehicle 1100 has the third luminance. For a second display attribute of the light carpet, refer to the descriptions of the second display attribute shown in the embodiment 1. Details are not described again. For example, in this example, there is a positive correlation between a length of the light carpet when the vehicle 1100 is in the safe state and the vehicle speed of the vehicle 1100, and a width of the light carpet is consistent with a width of a lane of a to-be-driven path.

The ADAS of the vehicle 1100 detects the vehicle speed of the vehicle 1100, the vehicle speed of the target vehicle 1101, and the distance between the vehicle 1100 and the target vehicle 1101 in real time.

As shown in FIG. 11a, when the vehicle 1100 continues to approach the intersection, if the ADAS of the vehicle 1100 obtains, through detection, that at least one of the vehicle 1100 and the target vehicle 1101 is in an accelerated state, the ADAS of the vehicle 1100 determines, based on the vehicle speed of the vehicle 1100, the vehicle speed of the target vehicle 1101, and the distance between the vehicle 1100 and the target vehicle 1101, that the vehicle 1100 is in a dangerous state, that is, the vehicle 1100 and the target vehicle 1101 may collide at the intersection. In this case, the vehicle 1100 may use the emergence decision of the emergency braking shown in the example 2. However, the emergency braking may cause alarm to a driver or a pedestrian or a vehicle around the vehicle 1100.

Therefore, in this example, in a case of a prediction event that the vehicle 1100 is about to be in the dangerous state, the driver or the pedestrian or the vehicle around the vehicle may be prompted by using the light carpet. FIG. 11b is an example diagram of illumination provided by a light carpet when a vehicle is in a dangerous state according to this application. When a vehicle 1100 determines that the vehicle is in a dangerous state, a first display attribute of a light carpet displayed by the vehicle 1100 on a to-be-driven path is that there is fourth luminance and there is a third flash frequency. For example, the fourth luminance is 10 lux (lx) higher than the third luminance. Based on the light carpet 1102 displayed on the to-be-driven path, a target vehicle can be reminded, to avoid a case in which the vehicle 1100 collides with the target vehicle 1101 at an intersection.

Step 906: If the vehicle determines that the light carpet meets a recalibration condition, return to perform step 902.

For descriptions of a specific execution process of step 905 in this embodiment, refer to the descriptions of the execution process of step 205 shown in the embodiment 1. Details are not described again.

The light carpet in this embodiment can match the driving assistance information and the to-be-driven path of the vehicle. Based on the light carpet, the driving intention of the vehicle, the emergency decision, the driving prediction event of the vehicle, and the like can be accurately recognized, thereby improving vehicle driving safety.

### Embodiment 3

In the embodiment 1, a function of the light carpet is to help the driver navigate. In the embodiment 2, a function of the light carpet is to improve the driving safety in a self-driving process. A function of a light carpet in this embodiment is to accurately recognize a to-be-recognized object in front of the vehicle. This embodiment describes, with reference to FIG. 12, a process in which the beam emitted by the vehicle forms the target light pattern. FIG. 12 is a flowchart of steps of a third embodiment of a vehicle light control method according to this application.

Step 1201: A vehicle determines that a trigger condition is met.

Step 1202: The vehicle obtains navigation information.

For execution processes of step 1201 and step 1202 in this embodiment, refer to step 201 and step 202 shown in the embodiment 1. Details are not described again.

Step 1203: The vehicle determines that a to-be-recognized object meets a preset condition.

For a better understanding, the following describes a specific application scenario with reference to FIG. 13. FIG. 13 is an eighth example diagram of application scenario comparison according to this application.

FIG. 13a is an example diagram of illumination provided for a to-be-recognized object that exists on a to-be-driven path according to an existing solution. If a vehicle 1300 is driven at night, the vehicle has a limited vehicle light illumination range. For example, if a to-be-recognized object 1301 exists outside an illumination range of a low beam light of the vehicle 1300, neither a driver nor an ADAS of the vehicle 1300 can accurately recognize the to-be-recognized object. For example, the ADAS of the vehicle recognizes, based on a sensor system (for example, an infrared imager or a lidar included in the vehicle) of the vehicle, that the to-be-recognized object of an unknown type exists in front of the vehicle 1300. The type of the to-be-recognized object may be an object that can affect driving safety of the vehicle 1300, for example, an obstacle, a pedestrian, or the like. In this case, because environment luminance of the vehicle is exceedingly low, a camera of the vehicle cannot recognize the specific type of the to-be-recognized object.

It can be learned from the embodiment 1 that the navigation information is a series of plane coordinates for the vehicle to reach a navigation destination. The preset condition in this embodiment is that the ADAS determines that a plane coordinate of the to-be-recognized object is close to the series of plane coordinates included in the navigation information. It can be learned that when the to-be-recognized object meets the preset condition, in a process in which the vehicle is driven based on the navigation information, a safety accident easily occurs due to collision with the to-be-recognized object.

Step 1204: The vehicle obtains information about a to-be-driven path.

For an execution process of step 1204 in this embodiment, refer to step 203 shown in the embodiment 1. Details are not described again.

Step 1205: The vehicle obtains a target light pattern.

Step 1206: A beam emitted by the vehicle is displayed on the to-be-driven path by using the target light pattern. In this embodiment of this application, the light displayed on a ground by using the target light pattern may be referred to as a light carpet.

The following describes step 1205 and step 1206 in a unified manner.

For descriptions of a length, a width, a bending direction, a flash frequency, luminance, and the like of the light carpet in this embodiment, refer to the foregoing embodiments. This is not specifically limited in this embodiment. A condition that is met by the light carpet in this embodiment is that the light carpet covers the plane coordinate of the to-be-recognized object. It can be learned that FIG. 13b is an example diagram of illumination provided by a light carpet for a to-be-recognized object that exists on a to-be-driven path according to this application.

A light carpet 1302 displayed by a vehicle 1300 on the to-be-driven path covers at least a target region 1303, where the target region 1303 is a region occupied by the to-be-recognized object. It can be learned that the light carpet 1302 can illuminate the target region 1303.

The target region 1303 in this embodiment may be located in a central region of the light carpet 1302. It should be noted that a relative location relationship between the light carpet 1303 and the light carpet 1302 is not limited in this embodiment, provided that the light carpet 1302 covers at least the target region 1303.

Step 1207: The vehicle captures a to-be-recognized image.

In this embodiment, when the light carpet of the vehicle covers the target region, the light carpet can illuminate the to-be-recognized object located in the target region. The vehicle may photograph the light carpet again based on the camera of the vehicle. Because there is plenty of luminance of the light carpet, the vehicle can photograph, based on the camera, a clear to-be-recognized image including the light carpet.

Step 1208: The vehicle obtains a type of the to-be-recognized object based on the to-be-recognized image.

The vehicle may recognize, based on an object recognition algorithm, an SFM algorithm, video tracking, AI, or the like, the type of the to-be-recognized object included in the to-be-recognized image. To be specific, the type of the to-be-recognized object is recognized as a type, for example, a pedestrian, a vehicle, or an obstacle, and a specific dimension of the to-be-recognized object is further optionally recognized. For example, if the to-be-recognized object is a pedestrian, the vehicle may further recognize a height of the pedestrian based on the to-be-recognized image. For another example, if the to-be-recognized object is an obstacle, the vehicle may further recognize a dimension of the obstacle and the like based on the to-be-recognized image.

Step 1209: The vehicle determines a driving decision based on the type of the to-be-recognized object.

In this embodiment, when the vehicle recognizes the type of the to-be-recognized object, the ADAS of the vehicle can determine the driving decision based on the type of the to-be-recognized object. For specific descriptions of the driving decision, refer to the embodiment 2. Details are not described again. It can be learned that the vehicle implements vehicle avoidance of the to-be-recognized object on the to-be-driven path based on the driving decision made by the ADAS based on the type of the to-be-recognized object. An avoidance manner includes but is not limited to turning, changing a lane, emergency braking, and the like.

Optionally, when the vehicle recognizes the type of the to-be-recognized object, the vehicle may alternatively prompt the driver by using a voice or the like.

It should be noted that, in this embodiment, an example in which the to-be-recognized object is located on the to-be-driven path is used for description. In another example, the to-be-recognized object may be located in any region around the vehicle. After the ADAS of the vehicle obtains the plane coordinate of the to-be-recognized object through detection, the beam may be emitted based on the plane coordinate of the to-be-recognized object, to ensure that the light carpet formed by the beam can illuminate the to-be-recognized object. The vehicle can recognize the specific type of the illuminated to-be-recognized object.

According to the method in this embodiment, when the to-be-recognized object exists on the to-be-driven path of the vehicle, the vehicle may illuminate the to-be-recognized object by using the light carpet formed by the emitted beam. The vehicle can recognize the illuminated to-be-recognized object to recognize the specific type, so that the vehicle performs the corresponding driving decision, the driver of the vehicle drives the vehicle based on the illuminated to-be-recognized object to achieve avoidance, or the like, thereby improving the vehicle driving safety in a scenario in which there is the to-be-recognized object in front of the vehicle.

### Embodiment 4

As shown in the embodiment 3, an example in which the to-be-recognized object exists on the to-be-driven path in front of the vehicle is used. In this embodiment, a to-be-recognized object exists in any location around the vehicle. For example, the to-be-recognized object exists directly in front of the vehicle, diagonally in front of the vehicle, on a right side of the vehicle, on a left side of the vehicle, or on a rear side of the vehicle. A function of a light carpet in this embodiment is to accurately recognize the to-be-recognized object that exists around the vehicle. This embodiment describes, with reference to FIG. 14, a process in which the beam emitted by the vehicle forms the light carpet. FIG. 14 is a flowchart of steps of a fourth embodiment of a vehicle light control method according to this application.

Step 1401: A vehicle determines that a trigger condition is met.

Step 1402: The vehicle obtains driving information.

The driving information in this embodiment may be the navigation information or the vehicle data shown in the embodiment 1, or may be the driving assistance information shown in the embodiment 2. For specific descriptions, refer to the embodiment 1 or the embodiment 2. Details are not described again.

Step 1403: The vehicle obtains information about a to-be-driven path.

Step 1404: The vehicle obtains a first light pattern.

Step 1405: A first beam emitted by the vehicle is displayed on the to-be-driven path by using the first light pattern.

The vehicle in this embodiment obtains the first light pattern by performing step 1401 to step 1405. For descriptions of a process of determining the first light pattern, refer to the descriptions of the process of obtaining the light carpet shown in the embodiment 1 or the embodiment 2. Details are not described again.

Step 1406: The vehicle obtains a plane coordinate of a to-be-recognized object.

For a better understanding, the following provides descriptions with reference to an application scenario shown in FIG. 15. FIG. 15 is a ninth example diagram of application scenario comparison according to this application.

FIG. 15a is an example diagram of illumination provided for a to-be-recognized object that exists in front of a vehicle according to an existing solution. If a vehicle 1500 is driven at night, the vehicle has a limited vehicle light illumination range. For example, if a to-be-recognized object 1501 exists outside an illumination range of a low beam light of the vehicle 1500, neither a driver nor an ADAS of the vehicle 1500 can accurately recognize the to-be-recognized object 1501.

FIG. 15b is an example diagram of illumination provided by a light carpet for a to-be-recognized object that exists in front of a vehicle according to this application. The vehicle 1500 has displayed a first light pattern 1502 on a to-be-driven path. However, the first light pattern 1502 has a limited illumination range. For example, if the to-be-recognized object 1501 is located outside the illumination range of the first light pattern 1502, neither the driver nor the ADAS of the vehicle 1500 can accurately recognize the to-be-recognized object 1501.

It can be learned that the ADAS of the vehicle recognizes, based on a sensor system (for example, an infrared imager or a lidar included in the vehicle) of the vehicle, that the to-be-recognized object 1501 of an unknown type exists in front of the vehicle 1500. The type of the to-be-recognized object 1501 may be an object that can affect driving safety of the vehicle 1500, for example, an obstacle, a pedestrian, or the like. In this case, because environment luminance of the vehicle is exceedingly low, a camera of the vehicle cannot recognize the to-be-recognized object 1501. Therefore, the ADAS of the vehicle in this embodiment obtains a plane coordinate of the to-be-recognized object 1501.

Step 1407: The vehicle obtains a second light pattern.

Step 1408: A second beam emitted by the vehicle is displayed around the vehicle by using the second light pattern.

For descriptions of a length, a width, a bending direction, a flash frequency, luminance, and the like of the second light pattern in this embodiment, refer to the descriptions of the light carpet in the foregoing embodiments. This is not specifically limited in this embodiment. A condition that is met by the second light pattern in this embodiment is that the second light pattern covers the plane coordinate of the to-be-recognized object. It can be learned that, as shown in FIG. 15b, a second light pattern 1503 displayed by the vehicle 1500 covers at least a target region, where the target region is a region occupied by the to-be-recognized object. It can be learned that the second light pattern 1503 can illuminate the target region.

The target region in this embodiment may be located in a central region of the second light pattern 1503. It should be noted that a relative location relationship between the target region and the second light pattern 1503 is not limited in this embodiment, provided that the second light pattern 1503 covers at least the target region.

It can be learned that the light carpet displayed by the vehicle in this embodiment includes the first light pattern for illuminating the to-be-driven path and includes the second light pattern for illuminating the to-be-recognized object. To be specific, the light carpet in this embodiment includes the first light pattern and the second light pattern that overlap with each other.

Step 1409: The vehicle captures a to-be-recognized image.

Step 1410: The vehicle obtains a type of the to-be-recognized object based on the to-be-recognized image.

Step 1411: The vehicle determines a driving decision based on the type of the to-be-recognized object.

For specific execution processes of step 1409 to step 1411 in this embodiment, refer to the descriptions of the execution processes of step 1207 and step 1208 shown in the embodiment 3. Details are not described again.

### Embodiment 5

This embodiment provides a lighting system. A beam emitted by the lighting system can display a light carpet on a to-be-driven path. For specific descriptions of the light carpet, refer to any one of the foregoing the embodiment 1 to the embodiment 4. This is not specifically limited in this embodiment.

FIG. 16 is an example diagram of a structure of an embodiment of a lighting system according to this application.

A lighting system 1600 in this embodiment includes a vehicle light module 1601 and a control unit 1602 connected to the vehicle light module 1601.

The control unit 1602 is configured to obtain driving information, where the driving information includes navigation information and/or driving assistance information. The control unit 1602 is further configured to obtain information about a to-be-driven path. The control unit 1602 is further configured to obtain a target light pattern corresponding to the driving information and the information about the to-be-driven path.

The vehicle light module 1601 is configured to emit a beam, and the beam is displayed on the to-be-driven path by using the target light pattern.

The following describes several optional examples of a specific location of the lighting system 1600 in a vehicle in this embodiment.

Example 1: The example shown in FIG. 1 is used as an example. The independent vehicle light module 150 is disposed in front of the vehicle 100, and the independently disposed vehicle light module is configured to emit only a beam having the target light pattern. The vehicle light module 150 includes the vehicle light module 1601 and the control unit 1602 connected to the vehicle light module 1601.

Example 2: The independent vehicle light module 150 is disposed in front of the vehicle 100, and the independently disposed vehicle light module is configured to emit only a beam having the target light pattern. The vehicle light module 150 includes the vehicle light module 1601, and the computer system 140 of the vehicle includes the control unit 1602.

Example 3: The vehicle has a left-side headlight, where the left-side headlight includes the vehicle light module 1601 and the control unit 1602 connected to the vehicle light module 1601, or the left-side headlight includes the vehicle light module 1601, and the computer system 140 of the vehicle includes the control unit 1602.

Example 4: The vehicle has a right-side headlight, where the right-side headlight includes the vehicle light module 1601 and the control unit 1602 connected to the vehicle light module 1601, or the right-side headlight includes the vehicle light module 1601, and the computer system 140 of the vehicle includes the control unit 1602.

Example 5: The vehicle light module 1601 shown in this example includes a first sub-vehicle light module and a second sub-vehicle light module. The first sub-vehicle light module emits a first sub-beam, and the second sub-vehicle light module emits a second sub-beam. The target light pattern shown in this example includes a light pattern displayed by the first sub-beam on the to-be-driven path and a light pattern displayed by the second sub-beam on the to-be-driven path. The first sub-vehicle light module is located inside the right-side headlight and the second sub-vehicle light module is located inside the left-side headlight.

Optionally, the control unit 1602 is located in the computer system 140, the control unit 1602 is located in the right-side headlight, the control unit 1602 is located in the left-side headlight, or the control unit 1602 includes a first sub-control unit and a second sub-control unit. The first sub-control unit and the second sub-control unit are respectively located in any two of the following: the right-side headlight, the left-side headlight, or the computer system 140 of the vehicle.

Optionally, the vehicle light module 1601 includes the first sub-vehicle light module and the second sub-vehicle light module that are respectively located in a left-side fog light and a right-side fog light of the vehicle. For specific descriptions, refer to the example 5. Details are not described again.

This application further includes a vehicle, and the vehicle includes the lighting system shown in FIG. 16.

The foregoing embodiments are merely intended for describing the technical solutions of the present invention other than limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof. Such modifications and replacements do not cause the essence of the corresponding technical solutions to depart from the spirit and scope of the technical solutions of embodiments of the present invention.

## Claims

1. A vehicle light control method, wherein the method comprises:
obtaining driving information, wherein the driving information comprises at least one of the following: navigation information, driving assistance information, and vehicle data;
obtaining information about a to-be-driven path;
obtaining a target light pattern corresponding to the driving information and the information about the to-be-driven path; and
displaying, on the to-be-driven path by using the target light pattern, a beam emitted by a vehicle.

2. The method according to claim 1, wherein the obtaining a target light pattern corresponding to the driving information and the information about the to-be-driven path comprises:
obtaining at least one first display attribute, wherein the at least one first display attribute corresponds to the driving information;
obtaining at least one second display attribute, wherein the at least one second display attribute corresponds to the information about the to-be-driven path; and
determining that a light pattern having the at least one first display attribute and the at least one second display attribute is the target light pattern.

3. The method according to claim 2, wherein the obtaining at least one first display attribute comprises:
obtaining a driving list, wherein the driving list comprises correspondences between different driving information and different display attributes; and
obtaining the at least one first display attribute, wherein the at least one first display attribute is a display attribute that is in the driving list and that corresponds to the driving information.

4. The method according to any one of claims 1 to 3, wherein a width of the target light pattern is equal to a width of the vehicle, and/or a length of the target light pattern is greater than or equal to a length of the vehicle.

5. The method according to any one of claims 1 to 4, wherein the target light pattern is consistent with a form of the to-be-driven path, and/or the width of the target light pattern is greater than or equal to a width of the to-be-driven path.

6. The method according to any one of claims 1 to 5, wherein if the to-be-driven path is in an arc shape, the target light pattern is also in an arc shape, and a bending direction of the to-be-driven path is consistent with a bending direction of the target light pattern.

7. The method according to any one of claims 1 to 6, wherein the driving information is a driving decision that is from an advanced driving assistance system ADAS of the vehicle, and the target light pattern corresponds to a type of the driving decision.

8. The method according to any one of claims 1 to 6, wherein the driving information is a vehicle speed of the vehicle, and there is a positive correlation between the vehicle speed of the vehicle and at least one of the following: the length of the target light pattern, a flash frequency of light displayed on a ground by using the target light pattern, or luminance of the light displayed on the ground by using the target light pattern.

9. The method according to any one of claims 1 to 6, wherein the driving information is luminance of an environment in which the vehicle is located.

10. The method according to any one of claims 1 to 6, wherein the driving information is a distance between the vehicle and a vehicle in front, and there is a negative correlation between a value of the distance and at least one of the following: luminance of light displayed on a ground by using the target light pattern or a flash frequency of the light displayed on the ground by using the target light pattern.

11. The method according to any one of claims 1 to 6, wherein the driving information is that there is a to-be-recognized object around the vehicle, the target light pattern covers at least a target region, and the target region is a region occupied by the to-be-recognized object.

12. The method according to any one of claims 1 to 11, wherein a distance between a center line of the to-be-driven path and a center line of the target light pattern is less than or equal to a first distance.

13. The method according to any one of claims 1 to 12, wherein along a transverse direction of the to-be-driven path, a distance between a boundary line of the target light pattern and a lane line of the to-be-driven path is less than or equal to a second distance.

14. The method according to any one of claims 1 to 13, wherein before the obtaining driving information, the method further comprises:
determining that a trigger condition is met, wherein the trigger condition is at least one of the following:
an instruction for displaying the target light pattern has been obtained, the vehicle speed is greater than or equal to a first preset value, the environment luminance is less than or equal to a second preset value, a variation of the vehicle speed is greater than or equal to a third preset value, a variation of the environment luminance is greater than or equal to a fourth preset value, or the form of the to-be-driven path changes.

15. A lighting system, wherein the lighting system comprises a vehicle light module and a control unit, the control unit is connected to the vehicle light module, wherein the control unit is configured to obtain driving information, wherein the driving information comprises at least one of the following: navigation information, driving assistance information, and vehicle data, is further configured to obtain information about a to-be-driven path, and is further configured to obtain a target light pattern corresponding to the driving information and the information about the to-be-driven path, and the vehicle light module is configured to display, on the to-be-driven path by using the target light pattern, a beam emitted by a vehicle.

16. The lighting system according to claim 15, wherein the control unit is configured to:
obtain at least one first display attribute, wherein the at least one first display attribute corresponds to the driving information;
obtain at least one second display attribute, wherein the at least one second display attribute corresponds to the information about the to-be-driven path; and
determine that a light pattern having the at least one first display attribute and the at least one second display attribute is the target light pattern.

17. The lighting system according to claim 15 or 16, wherein the driving information is a driving decision that is from an advanced driving assistance system ADAS of the vehicle, and the target light pattern corresponds to a type of the driving decision.

18. The lighting system according to any one of claims 15 to 17, wherein the driving information is that there is a to-be-recognized object around the vehicle, the target light pattern covers at least a target region, and the target region is a region occupied by the to-be-recognized object.

19. A vehicle, wherein the vehicle comprises the lighting system according to any one of claims 15 to 18.
